# EUROPÄISCHE PATENTSCHRIFT

(11) **EP 4 048 424 B1**
(45) Veröffentlichungstag und Bekanntmachung des Hinweises auf die Patenterteilung: **24.07.2024**
(21) Anmeldenummer: 20793686.5
(22) Anmeldetag: 21.10.2020
(51) Int. Cl.: B01D 27/06, B01D 27/08

(54) **BEHANDLUNGSVORRICHTUNG ZUR BEHANDLUNG VON INSBESONDERE FLÜSSIGEN FLUIDEN SOWIE BEHANDLUNGSEINHEIT UND ANSCHLUSSKOPF FÜR EINE BEHANDLUNGSVORRICHTUNG**
TREATMENT DEVICE FOR TREATING FLUIDS, IN PARTICULAR LIQUID FLUIDS, AND TREATMENT UNIT AND CONNECTION HEAD FOR A TREATMENT DEVICE
DISPOSITIF DE TRAITEMENT POUR TRAITER DES FLUIDES, EN PARTICULIER DES FLUIDES LIQUIDES, ET UNITÉ DE TRAITEMENT ET TÊTE DE RACCORDEMENT POUR UN DISPOSITIF DE TRAITEMENT

(30) Priorität: 25.10.2019 DE 102019128844; 29.01.2020 DE 102020102165
(43) Veröffentlichungstag der Anmeldung: 31.08.2022
(73) Patentinhaber: MANN+HUMMEL GmbH, 71636 Ludwigsburg (DE)
(72) Erfinder: THALMANN, Christian, 67346 Speyer (DE); VENKATESH NAYAK, Hemanth Kumar, T. Narasipura Mysore 571124 (IN)
(74) Vertreter: Mann + Hummel Intellectual Property
(86) Internationale Anmeldenummer: PCT/EP2020/079538
(87) Internationale Veröffentlichungsnummer: WO 2021/078759

(56) Entgegenhaltungen:
- EP-A1- 3 228 374
- EP-A2- 1 127 602
- WO-A1-2015/091665

## Beschreibung

### Technisches Gebiet

Die Erfindung betrifft eine Behandlungsvorrichtung, insbesondere Filtervorrichtung zur Behandlung, insbesondere Filtrierung, von insbesondere flüssigen Fluiden, insbesondere Kraftstoff, Öl oder Wasser, insbesondere einer Brennkraftmaschine, insbesondere eines Kraftfahrzeugs, mit einer auswechselbaren Behandlungseinheit. Die Erfindung betrifft ferner eine Behandlungseinheit sowie einen Anschlusskopf für eine Behandlungsvorrichtung.

### Stand der Technik

Aus EP 3 228 374 A1 ist ein Wechselfilter mit einer lösbaren, bayonettartigen Verbindung bekannt. Aus der WO 2015091665 A1 ist ein Filter bekannt zur Filtrierung von insbesondere flüssigen Fluiden, insbesondere Kraftstoff oder Öl, insbesondere einer Brennkraftmaschine, mit einem Filtertopf, in dem ein Filterelement angeordnet ist, und einem Filterkopf, der einen Einlass und/oder einen Auslass für das Fluid aufweist. Der Filterkopf und der Filtertopf sind mittels einer lösbaren bajonettartigen Steck-/Drehverbindung miteinander verbunden. Die Steck-/Drehverbindung weist wenigstens zwei zusammenwirkende Rastbauteile auf, von denen eines mit dem Filtertopf und eines ist mit dem Filterkopf verbunden ist.

### Offenbarung der Erfindung

Der Erfindung liegt die Aufgabe zugrunde, eine Behandlungsvorrichtung mit einer auswechselbaren Behandlungseinheit zu schaffen, bei der ein Austausch der Behandlungseinheit auf einfache und bauraumsparende Weise ermöglicht wird.

Weitere Aufgaben sind die Bereitstellung einer Behandlungseinheit sowie eines Anschlusskopfs für eine solche Behandlungsvorrichtung.

Die vorgenannte Aufgabe wird nach einem Aspekt der Erfindung gelöst von einer Behandlungsvorrichtung, insbesondere Filtervorrichtung, für ein Fluid, insbesondere für ein flüssiges Fluid, mit einer auswechselbaren Behandlungseinheit, welche ein Gehäuse mit einem Gehäusetopf, einem Gehäusedeckel, wenigstens einem Einlass für das zu behandelnde Fluid und wenigstens einem Auslass für das behandelte Fluid aufweist, und mit einem Anschlusskopf, der wenigstens einen Zulauf für das zu behandelnde Fluid, der mit dem wenigstens einen Einlass verbindbar ist, und/oder wenigstens einen Ablauf für das behandelte Fluid, der mit dem wenigstens einen Auslass verbindbar ist, aufweist,
wobei der Anschlusskopf und die Behandlungseinheit mittels einer lösbaren bajonettartigen Verbindungseinrichtung unter Ausführung einer Steck-/Drehbewegung um eine Verbindungsachse der Behandlungsvorrichtung miteinander verbindbar sind und
die Verbindungseinrichtung wenigstens ein Gehäuse-Verbindungsteil auf Seiten des Gehäuses und wenigstens ein Kopf-Verbindungsteil auf Seiten des Anschlusskopfs aufweist, die zum Herstellen einer Verbindung der Verbindungseinrichtung miteinander wirkverbindbar sind, wobei das Gehäuse-Verbindungsteil und das Kopf-Verbindungsteil in Umfangsrichtung um die Verbindungsachse jeweils wenigstens ein zueinander komplementäres Funktionselement aufweisen, die miteinander wirkverbindbar sind, und wobei die Verbindungseinrichtung wenigstens ein Vorspannelement aufweist zur Realisierung einer mechanischen Vorspannung, mit der die zueinander komplementären Funktionselemente gegeneinander pressbar sind. Das Vorspannelement ist ein Federelement mit wenigstens zwei radial nach außen ragenden Federarmen, welche an ihrer radial äußeren Stirnseite einen geraden Abschnitt aufweisen, der tangential zu einem um die Verbindungsachse kreisförmig verlaufenden Rand ausgerichtet ist.

Die weitere Aufgabe wird nach einem weiteren Aspekt der Erfindung gelöst von einer Behandlungseinheit für eine Behandlungsvorrichtung, zum Verbinden mit einem Anschlusskopf, welche ein Gehäuse aufweist mit einem Gehäusetopf, einem Gehäusedeckel, wenigstens einem Einlass für das zu behandelnde Fluid und wenigstens einem Auslass für das behandelte Fluid, wobei der Anschlusskopf der Behandlungsvorrichtung mittels einer lösbaren bajonettartigen Verbindungseinrichtung unter Ausführung einer Steck-/Drehbewegung um eine Verbindungsachse der Behandlungsvorrichtung mit der Behandlungseinheit verbindbar ist und die Verbindungseinrichtung ein Gehäuse-Verbindungsteil auf Seiten des Gehäuses aufweist, das zum Verbinden der Verbindungseinrichtung mit wenigstens einem Kopf-Verbindungsteil auf Seiten des Anschlusskopfs ausgebildet ist, wobei der wenigstens eine Einlass mit wenigstens einem Zulauf des Anschlusskopfs für das zu behandelnde Fluid und/oder der wenigstens eine Auslass mit wenigstens einem Ablauf des Anschlusskopfs für das behandelnde Fluid verbindbar ist, wobei das Gehäuse-Verbindungsteil und das Kopf-Verbindungsteil in Umfangsrichtung um die Verbindungsachse jeweils wenigstens ein zueinander komplementäres Funktionselement aufweisen, die miteinander wirkverbindbar sind, und die Verbindungseinrichtung wenigstens ein Vorspannelement aufweist zur Realisierung einer mechanischen Vorspannung, mit der die zueinander komplementären Funktionselemente gegeneinander pressbar sind. Das Vorspannelement ist ein Federelement mit wenigstens zwei radial nach außen ragenden Federarmen, welche an ihrer radial äußeren Stirnseite einen geraden Abschnitt aufweisen, der tangential zu einem um die Verbindungsachse kreisförmig verlaufenden Rand ausgerichtet ist. Bei der Behandlungseinheit ist das Vorspannelement durch das Gehäuse-Verbindungsteil am Gehäusedeckel der Behandlungseinheit gesichert. Dies erlaubt eine kompakte Bauweise und eine Befestigung des Vorspannelements ohne zusätzliche Bauteile.

Die weitere Aufgabe wird nach einem weiteren Aspekt der Erfindung gelöst von einem Anschlusskopf für eine Behandlungsvorrichtung, zum Verbinden mit einer Behandlungseinheit, welche ein Gehäuse aufweist mit einem Gehäusetopf, einem Gehäusedeckel, wenigstens einem Einlass für das zu behandelnde Fluid und wenigstens einem Auslass für das behandelte Fluid, wobei der Anschlusskopf der Behandlungsvorrichtung mittels einer lösbaren bajonettartigen Verbindungseinrichtung unter Ausführung einer Steck-/Drehbewegung um eine Verbindungsachse der Behandlungsvorrichtung mit der Behandlungseinheit verbindbar ist und die Verbindungseinrichtung wenigstens ein Kopf-Verbindungsteil auf Seiten des Anschlusskopfs aufweist, das zum Verbinden der Verbindungseinrichtung mit wenigstens einem Gehäuse-Verbindungsteil auf Seiten des Gehäuses ausgebildet ist, wobei wenigstens ein Zulauf des Anschlusskopfs mit dem wenigstens einen Einlass für das zu behandelnde Fluid und/oder wenigstens ein Ablauf des Anschlusskopfs mit dem wenigstens einen Auslass für das behandelnde Fluid verbindbar ist, wobei das Gehäuse-Verbindungsteil und das Kopf-Verbindungsteil in Umfangsrichtung um die Verbindungsachse jeweils wenigstens ein zueinander komplementäres Funktionselement aufweisen, die miteinander wirkverbindbar sind, und die Verbindungseinrichtung wenigstens ein Vorspannelement aufweist zur Realisierung einer mechanischen Vorspannung, mit der die zueinander komplementären Funktionselemente gegeneinander pressbar sind. Das Vorspannelement ist ein Federelement mit wenigstens zwei radial nach außen ragenden Federarmen, welche an ihrer radial äußeren Stirnseite einen geraden Abschnitt aufweisen, der tangential zu einem um die Verbindungsachse kreisförmig verlaufenden Rand ausgerichtet ist. Bei dem Anschlusskopf ist das Vorspannelement durch das Kopf-Verbindungsteil im Anschlusskopf gesichert.

Günstige Ausgestaltungen und Vorteile der Erfindung ergeben sich aus den weiteren Ansprüchen, der Beschreibung und der Zeichnung.

Es wird eine Behandlungsvorrichtung, insbesondere Filtervorrichtung, für ein Fluid, insbesondere für ein flüssiges Fluid, mit einer auswechselbaren Behandlungseinheit vorgeschlagen, welche ein Gehäuse mit einem Gehäusetopf, einem Gehäusedeckel, wenigstens einem Einlass für das zu behandelnde Fluid und wenigstens einem Auslass für das behandelte Fluid aufweist, und mit einem Anschlusskopf, der wenigstens einen Zulauf für das zu behandelnde Fluid, der mit dem wenigstens einen Einlass verbindbar ist, und/oder wenigstens einen Ablauf für das behandelte Fluid, der mit dem wenigstens einen Auslass verbindbar ist, aufweist. Der Anschlusskopf und die Behandlungseinheit sind mittels einer lösbaren bajonettartigen Verbindungseinrichtung unter Ausführung einer Steck-/Drehbewegung um eine Verbindungsachse der Behandlungsvorrichtung miteinander verbindbar. Die Verbindungseinrichtung weist wenigstens ein Gehäuse-Verbindungsteil auf Seiten des Gehäuses und wenigstens ein Kopf-Verbindungsteil auf Seiten des Anschlusskopfs auf, die zum Herstellen einer Verbindung der Verbindungseinrichtung miteinander wirkverbindbar sind, wobei das Gehäuse-Verbindungsteil und das Kopf-Verbindungsteil in Umfangsrichtung um die Verbindungsachse jeweils wenigstens ein zueinander komplementäres Funktionselement aufweisen, die miteinander wirkverbindbar sind. Dabei weist die Verbindungseinrichtung wenigstens ein Vorspannelement auf zur Realisierung einer mechanischen Vorspannung, mit der die zueinander komplementären Funktionselemente gegeneinander pressbar sind.

Erfindungsgemäß ist das Vorspannelement ein Federelement mit wenigstens zwei radial nach außen ragenden Federarmen, welche an ihrer radial äußeren Stirnseite einen geraden Abschnitt aufweisen, der tangential zu einem um die Verbindungsachse kreisförmig verlaufenden Rand ausgerichtet ist.

Der Rand kann ein Rand des Gehäusetopfs sein, wenn das Vorspannelement im Anschlusskopf angeordnet ist. Alternativ kann der Rand ein Rand des Anschlusskopfs sein, wenn das Vorspannelement in der Behandlungseinheit angeordnet ist.

Dadurch, dass mit dem Vorspannelement eine mechanische Vorspannung realisiert werden kann, mit der die zueinander komplementären Funktionselemente gegeneinander pressbar sind, kann die Verbindungseinrichtung unter einer mechanischen Spannung gehalten werden. Betriebsbedingte Vibrationen können so gedämpft werden. Auch können betriebsbedingte Geräusche verringert werden. Insbesondere kann ein etwaiges Klappern verhindert werden. Ferner kann eine etwaige Rastkraft, welche zum Schließen oder Öffnen der Verrastung überwunden werden muss, erzeugt oder vergrößert werden.

Das wenigstens eine Vorspannelement kann vorteilhafterweise an dem Anschlusskopf angeordnet sein. Auf diese Weise kann es als Lebensdauerbauteil ausgelegt sein. Es muss nicht gemeinsam mit der Behandlungseinheit ausgetauscht werden. Alternativ oder zusätzlich kann jedoch wenigstens ein Vorspannelement an dem Gehäuse angeordnet sein. Es kann so gemeinsam mit der Behandlungseinheit ausgetauscht werden.

Das wenigstens eine Vorspannelement kann vorteilhafterweise elastisch sein. Das wenigstens eine Vorspannelement kann aufgrund seiner Form und/oder seiner Materialzusammensetzung elastisch sein. Vorteilhafterweise kann das wenigstens eine Vorspannelement Kunststoff, insbesondere Elastomer, aufweisen oder daraus sein. Vorteilhafterweise kann das wenigstens eine Vorspannelement ein Federelement, insbesondere eine Drahtbiegeteil, sein oder aufweisen. Es kann vorteilhafterweise aus einem elastischen Metall sein.

Das wenigstens eine Vorspannelement kann sternförmig mit drei "Zacken" oder mehr Zacken ausgebildet sein, welche die Federarme bilden, die sich von einem zentralen Bereich nach außen erstrecken. Vorteilhaft können die Federarme im Querschnitt rechteckig oder trapezförmig geformt sein.

Die Verbindungsteile der Verbindungseinrichtung können aus Halbzeug oder Formteilen entsprechend geformt, insbesondere gebogen, gefalzt, geknickt, geschnitten oder gestanzt oder dergleichen, sein. Auf diese Weise können gegebenenfalls die entsprechenden Rastabschnitte und (Gegen-)Führungsabschnitte realisiert werden.

Vorteilhafterweise kann radial innerhalb der ersten Verbindungsteile, die aus Halbzeug oder Formteilen geformt, insbesondere gebogen, gefalzt, geknickt, geschnitten oder gestanzt oder dergleichen, sind, wenigstens ein Teil des Halbzeugs oder der Formteile vorgesehen sein. Vorteilhafterweise ist der radial innerhalb der ersten Verbindungsteile angeordnete Teil des Halbzeugs oder der Formteile in Umfangsrichtung geschlossen. Hierdurch kann die Stabilität der Verbindungseinrichtung und damit die Steifigkeit und Dauerbelastbarkeit der Verbindung zwischen den Verbindungseinrichtungen verbessert werden.

Die Verbindungsteile können vorteilhafterweise radial innerhalb wenigstens einer Umfangswand des Gehäuses und/oder des Anschlusskopfs angeordnet sein. Auf diese Weise kann die bajonettartige Verbindungseinrichtung zur Umgebung hin geschützt werden. Die Verbindungseinrichtung kann vorteilhafterweise in einem entsprechenden Verbindungsraum zwischen dem Gehäuse und dem Anschlusskopf angeordnet sein.

Nach einer günstigen Ausgestaltung der Behandlungsvorrichtung kann das Vorspannelement durch das Kopf-Verbindungsteil im Anschlusskopf gesichert sein. Die Befestigung des Vorspannelements erfordert kein zusätzliches Bauteil und kann zeitsparend in einem Arbeitsschritt mit dem Einbau des Kopf-Verbindungsteils erfolgen.

Nach einer günstigen Ausgestaltung der Behandlungsvorrichtung können die Federarme im Wesentlichen flach auf dem Rand des Gehäusetopfs aufliegen. Günstigerweise kann der jeweilige Federarm drei Berührpunkte mit dem Rand ausbilden.

Nach einer günstigen Ausgestaltung der Behandlungsvorrichtung kann das Vorspannelement als Drahtbiegeteil ausgebildet sein. Dies erlaubt eine kostengünstige Fertigung des Vorspannelements sowie einen vorteilhaft geringen Bauraumverbrauch.

Nach einer günstigen Ausgestaltung der Behandlungsvorrichtung kann wenigstens eines der zueinander komplementären Funktionselemente eine Montagerampe aufweisen, die in einen bezogen auf die Verbindungsachse senkrechten Auflagebereich übergeht und das andere der zueinander komplementären Funktionselemente einen Gleitbereich aufweist, an den ein, bezogen auf die Verbindungsachse, senkrechter Auflagebereich anschließt. In einer Verbindungs-Endposition der Verbindungseinrichtung können die beiden Auflagebereiche bezogen auf die Verbindungsachse übereinander positioniert sein. Insbesondere kann an den jeweiligen Auflagebereich in Umfangsrichtung ein Endanschlag, insbesondere ein Rastelement, insbesondere ein Rastvorsprung oder ein Rastabschnitt oder ein Rücksprung, wenigstens einer Rastsicherung, anschlie-βen, welche in der Schließposition der wenigstens einen Verbindungseinrichtung hintereinander, miteinander oder ineinander verrastet.

Der senkrechte Auflagebereich ermöglicht einen verbesserten Kraftfluss in anschlusskopfseitige und behandlungseinrichtungsseitige Funktionselemente, insbesondere die komplementären Bajonettringe. Mechanische Spannungen an Bauteilrändern werden vermindert. Die Auflagefläche der Verbindungseinrichtung wird vergrößert, sodass Verschleiß bei Vibration und Relativbewegung zwischen den Komponenten der Verbindungseinrichtung vermindert werden kann. Ebenso können Montage- und Demontagekräfte vermindert werden. Die Auflagebereiche weisen ein geringeres "Eingraben" an den Kontaktflächen auf, wodurch der Einfluss von Verschleiß bei Montage und Demontage der Behandlungseinheit vermindert werden kann.

Mit der Rastsicherung kann eine Gefahr verringert werden, dass sich die Verbindungseinrichtung durch eine ungewünschte Drehung der Behandlungseinheit um die Verbindungsachse lösen kann.

Zum Schließen und Lösen der wenigstens einen Rastsicherung können die entsprechenden Rastelemente durch die entsprechende Drehung der Behandlungseinheit voneinander getrennt oder aneinander vorbei geführt werden. Hierzu kann es erforderlich sein, entsprechende Rastkräfte zu überwinden. An einem derartigen erhöhten Kraftaufwand beim Anbau kann auch einfach erfasst werden, wenn die Behandlungseinheit in ihrer korrekten Position ist.

Nach einer günstigen Ausgestaltung der Behandlungsvorrichtung können bei wenigstens einem der Funktionselemente ein oder mehrere Auflagebereiche vorgesehen sind, wobei eine Gesamtlänge in Umfangsrichtung wenigstens 20%, bevorzugt wenigstens 23%, ganz besonders bevorzugt wenigstens 30%, eines entsprechenden Umfangs auf demselben Radius des entsprechenden Gehäuse-Verbindungsteils und/oder des Kopf-Verbindungsteils einnimmt. Auf diese Weise lässt sich der Kraftfluss in die Komponenten der Verbindungseinrichtung verbessern und mechanische Spannungen an Bauteilrändern weiter vermindern. Es ergibt sich eine vergrößerte und gleichmäßigere Auflagefläche der Verbindungseinrichtung.

Nach einer günstigen Ausgestaltung der Behandlungsvorrichtung kann eine äußere Ringdichtung radial innerhalb des Gehäuse-Verbindungsteils angeordnet ist. Vorteilhafterweise kann mit wenigstens einer Dichtungseinrichtung wenigstens ein fluidführender Bereich der Behandlungsvorrichtung zur Umgebung hin abgedichtet werden. Vorteilhafterweise überragt die äußere Ringdichtung die Verbindungseinrichtung in axialer Richtung um maximal 5 mm nach oben oder nach unten. Dies ist bzgl. der Bauraumausnutzung von Vorteil, da der Dichtungsbereich die axiale Erstreckung der Verbindungseinrichtung nutzt.

Nach einer günstigen Ausgestaltung der Behandlungsvorrichtung kann die Behandlungseinheit, insbesondere der Gehäusedeckel und/oder eine Endscheibe eines etwaigen Filterelements, und der Anschlusskopf jeweils wenigstens ein Korrespondenzelement, insbesondere einen Stutzen, bevorzugt einen Anschlussstutzen und/oder Verbindungsstutzen und/oder Dichtungsstutzen und/oder Zylinderstutzen, aufweisen, welche bei montierter Behandlungseinheit paarweise korrespondieren. Insbesondere kann wenigstens ein Paar von Korrespondenzelementen innerhalb wenigstens eines anderen Paares von Korrespondenzelementen angeordnet sein.

Auf diese Weise können die Korrespondenzelemente radial bezüglich der Verbindungsachse relativ zueinander fixiert werden. Alternativ können die Korrespondenzelemente paarweise auf Stoß, insbesondere unter Zwischenlage einer Dichtungseinrichtung, angeordnet sein. Auf diese Weise können bezüglich der Verbindungsachse radiale Lagetoleranzen einfach kompensiert werden.

Dadurch, dass ein Paar von Korrespondenzelementen innerhalb wenigstens eines anderen Paares von Korrespondenzelementen angeordnet sein kann, kann in dem inneren Paar von Korrespondenzelementen ein erster fluidführender Bereich, insbesondere ein Auslasskanal für das Fluid, realisiert werden.

Zwischen den inneren Paar von Korrespondenzelementen und dem äußeren Paar von Korrespondenzelementen kann vorteilhafterweise ein zweiter fluidführender Bereich, insbesondere ein Einlassringraum für das Fluid, realisiert werden.

Die Korrespondenzelemente, insbesondere die Paare von Korrespondenzelementen, können jeweils koaxial zur Verbindungsachse sein. Auf diese Weise können sie einfacher relativ zueinander positioniert werden. Ferner können so die fluidführenden Bereiche umfangsmäßig gleichmä-βiger sein.

Nach einer günstigen Ausgestaltung der Behandlungsvorrichtung kann das Kopf-Verbindungsteil und/oder das Gehäuse-Verbindungsteil aus Blech gebildet sein oder Blech aufweisen. Blech kann in der Regel in seinem Ausgangszustand als gewalztes Metall in Form von ebenen, flachen Tafeln oder Bändern vorliegen. Blech kann einfach mit einer gleichmäßigen Materialdicke realisiert werden. Aus Blech kann auch mit einer verhältnismäßig geringen Materialdicke ein mechanisch stabiles Verbindungsteil realisiert werden. Auf diese Weise kann der erforderliche Bauraum, insbesondere in axialer Richtung, der Verbindungseinrichtung verringert werden. Blech kann einfach verarbeitet oder bearbeitet, insbesondere gebogen, gefaltet, gestanzt, geschnitten oder geschweißt, werden. Mit Blech können einfach Verbindungen zwischen Bauteilen, insbesondere Bördelverbindungen oder Schweißverbindungen, realisiert werden. Vorteilhafterweise kann wenigstens eines der Verbindungsteile als Blechumformteil ausgeführt sein.

Vorteilhaft kann das Kopf-Verbindungsteil und/oder das Gehäuse-Verbindungsteil nicht als Ziehteil, sondern als einfaches Blechbiegeteil ausgeführt sein. Bei einem Biegeteil sind nur geringe Umformgrade notwendig. Die Verbindungseinrichtung kann daher aus einem härteren Material gebildet sein, so dass das Kopf-Verbindungsteil und/oder das Gehäuse-Verbindungsteil eine verbesserte Verschleißfestigkeit aufweisen. Bei der Formgebung von Kopf-Verbindungsteil und/oder Gehäuse-Verbindungsteil können Aufwölbungen weitgehend vermieden werden, wenn das Material nur gebogen wird.

Nach einem weiteren Aspekt der Erfindung wird eine Behandlungseinheit vorgeschlagen für eine Behandlungsvorrichtung, insbesondere nach einem der vorigen Ansprüche, insbesondere Filtervorrichtung, welche ein Gehäuse aufweist mit einem Gehäusetopf, einem Gehäusedeckel, wenigstens einem Einlass für das zu behandelnde Fluid und wenigstens einem Auslass für das behandelte Fluid. Die Behandlungseinheit ist mittels einer lösbaren bajonettartigen Verbindungseinrichtung unter Ausführung einer Steck-/Drehbewegung um eine Verbindungsachse einer Behandlungsvorrichtung mit einem Anschlusskopf der Behandlungsvorrichtung verbindbar. Die Verbindungseinrichtung weist wenigstens ein Gehäuse-Verbindungsteil auf Seiten des Gehäuses auf, das zum Verbinden der Verbindungseinrichtung mit wenigstens einem Kopf-Verbindungsteil auf Seiten des Anschlusskopfs ausgebildet ist, wobei der wenigstens eine Einlass mit wenigstens einem Zulauf des Anschlusskopfs für das zu behandelnde Fluid und/oder der wenigstens eine Auslass mit wenigstens einem Ablauf des Anschlusskopfs für das behandelnde Fluid verbindbar ist. Das Gehäuse-Verbindungsteil und das Kopf-Verbindungsteil weisen in Umfangsrichtung um die Verbindungsachse jeweils wenigstens ein zueinander komplementäres Funktionselement auf, die miteinander wirkverbindbar sind, und die Verbindungseinrichtung weist wenigstens ein Vorspannelement auf zur Realisierung einer mechanischen Vorspannung, mit der die zueinander komplementären Funktionselemente gegeneinander pressbar sind. Das Vorspannelement ist ein Federelement mit wenigstens zwei radial nach außen ragenden Federarmen, welche an ihrer radial äußeren Stirnseite jeweils einen geraden Abschnitt aufweisen, der tangential zu einem um die Verbindungsachse kreisförmig verlaufenden Rand ausgerichtet ist.

Nach einem weiteren Aspekt der Erfindung wird ein Anschlusskopf für eine solche Behandlungsvorrichtung vorgeschlagen, wobei der Anschlusskopf ein Vorspannelement aufweist, das ein Federelement mit wenigstens zwei radial nach außen ragenden Federarmen ist, welche an ihrer radial äußeren Stirnseite jeweils einen geraden Abschnitt aufweisen, der tangential zu einem um die Verbindungsachse kreisförmig verlaufenden Rand ausgerichtet ist.

Die in Verbindung mit der erfindungsgemäßen Behandlungsvorrichtung und deren vorteilhaften Ausführungsformen aufgezeigten Vorteile und Merkmale gelten für die erfindungsgemäße Behandlungseinheit und den erfindungsgemäßen Anschlusskopf und deren vorteilhafte Ausführungsformen entsprechend und umgekehrt.

Der Rand kann ein Rand des Gehäusetopfs sein, wenn das Vorspannelement im Anschlusskopf angeordnet ist. Der Rand kann ein Rand des Anschlusskopfs sein, wenn das Vorspannelement in der Behandlungseinheit angeordnet ist.

Dadurch, dass mit dem Vorspannelement eine mechanische Vorspannung realisiert werden kann, mit der die zueinander komplementären Funktionselemente gegeneinander pressbar sind, kann die Verbindungseinrichtung unter einer mechanischen Spannung gehalten werden. Betriebsbedingte Vibrationen können so gedämpft werden. Auch können betriebsbedingte Geräusche verringert werden. Insbesondere kann ein etwaiges Klappern verhindert werden. Ferner kann eine etwaige Rastkraft, welche zum Schließen oder Öffnen der Verrastung überwunden werden muss, erzeugt oder vergrößert werden.

Nach einer günstigen Ausgestaltung der Behandlungseinheit können die Federarme ausgebildet sein, im Wesentlichen flach auf dem Rand des Anschlusskopfs aufzuliegen. Insbesondere können am jeweiligen Federarm drei Berührpunkte mit dem Rand vorgesehen sein. Alternativ können die Federarme nach einer günstigen Ausgestaltung des Anschlusskopfs dazu ausgebildet sein, im Wesentlichen flach auf dem Rand des Gehäusetopfs aufzuliegen. Günstigerweise können in beiden Ausgestaltungen am jeweiligen Federarm drei Berührpunkte mit dem Rand vorgesehen sein.

Nach einer günstigen Ausgestaltung der Behandlungseinheit und/oder des Anschlusskopfs kann das Vorspannelement als Drahtbiegeteil ausgebildet sein. Dies erlaubt eine kostengünstige Herstellung sowie eine große Variabilität der Formgebung.

Nach einer günstigen Ausgestaltung der Behandlungseinheit kann das Gehäuse-Verbindungsteil eine Verdrehsicherung aufweisen. Insbesondere kann das Gehäuse-Verbindungsteil am Rand wenigstens eine Kerbe als Verdrehsicherung aufweisen. Vorteilhaft kann die Verdrehsicherung mit einem Rand des Gehäusetopfs im Sinne einer Verdrehsicherung zusammenwirken.

Nach einer günstigen Ausgestaltung der Behandlungseinheit kann das wenigstens eine Gehäuse-Verbindungsteil wenigstens ein Funktionselement aufweisen, wobei das wenigstens eine Funktionselement mit wenigstens einem Funktionselement des Kopf-Verbindungsteils wirkverbindbar ist und wobei das wenigstens eine Funktionselement einen bezogen auf die Verbindungsachse senkrechten Auflagebereich aufweist. Entsprechend kann das wenigstens eine Kopf-Verbindungsteil des Anschlusskopfs wenigstens ein Funktionselement aufweisen, wobei das wenigstens eine Funktionselement mit wenigstens einem Funktionselement des Gehäuse-Verbindungsteils wirkverbindbar ist.

Insbesondere kann das wenigstens eine Funktionselement eine Montagerampe oder einen Gleitbereich aufweisen, die oder der in einen, bezogen auf die Verbindungsachse senkrechten, Auflagebereich übergeht. In einer Verbindungs-Endposition der Verbindungseinrichtung können die beiden Auflagebereiche bezogen auf die Verbindungsachse übereinander positioniert sein. Der senkrechte Auflagebereich ermöglicht einen verbesserten Kraftfluss in anschlusskopfseitigen und behandlungseinrichtungsseitige Funktionselemente, insbesondere die komplementären Bajonettringe. Mechanische Spannungen an Bauteilrändern werden vermindert. Die Auflagefläche der Verbindungseinrichtung wird vergrößert, so dass Verschleiß bei Vibration und Relativbewegung zwischen den Komponenten der Verbindungseinrichtung vermindert werden kann. Ebenso können Montage- und Demontagekräfte vermindert werden. Die Auflagebereiche weisen ein geringeres "Eingraben" an den Kontaktflächen auf, wodurch der Einfluss von Verschleiß bei Montage und Demontage der Behandlungseinheit vermindert werden kann.

Nach einer günstigen Ausgestaltung der Behandlungseinheit und/oder des Anschlusskopfs können ein oder mehrere Auflagebereiche vorgesehen sind, wobei eine Gesamtlänge des oder der Auflagebereiche in Umfangsrichtung wenigstens 20% eines entsprechenden Umfangs auf demselben Radius des Gehäuse-Verbindungsteils oder in entsprechender Ausgestaltung des Anschlusskopfs einnimmt, bevorzugt wenigstens 23%, ganz besonders bevorzugt wenigstens 30%. entsprechenden Gehäuse-Verbindungsteils und/oder des Kopf-Verbindungsteils einnimmt. Auf diese Weise lässt sich der Kraftfluss in die Komponenten der Verbindungseinrichtung verbessern und mechanische Spannungen an Bauteilrändern weiter vermindern. Es ergibt sich eine vergrößerte und gleichmäßigere Auflagefläche der Verbindungseinrichtung.

Vorteilhafterweise kann der Gehäusedeckel insbesondere elastisch verformbar sein. Er kann so durch einen insbesondere beim Betrieb der Behandlungsvorrichtung in dem Gehäuse herrschenden Überdruck gegen den Anschlusskopf oder gegen eine Abdeckring gepresst werden. Der Anschlusskopf kann so den Gehäusedeckel stützen. So können die Anforderungen an die Druckstabilität des Gehäusedeckels verringert werden. Der Gehäusedeckel kann so einfacher, insbesondere aus einfacheren Materialien, realisiert sein.

Vorteilhafterweise kann die Behandlungseinheit ein Wechselfilter, insbesondere ein Ölwechselfilter oder ein Kraftstoffwechselfilter, sein. Das Gehäuse der Behandlungseinheit kann dann ein Filtergehäuse sein. Vorteilhafterweise kann in dem Filtergehäuse wenigstens ein Filterelement so angeordnet sein, dass es den wenigstens einen Einlass von dem wenigstens einen Auslass trennen kann. Der Anschlusskopf kann vorteilhafterweise ein Filterkopf sein, an dem der Wechselfilter, insbesondere das Filtergehäuse, mittels der Verbindungseinrichtung lösbar montiert werden kann.

Ein Wechselfilter ist üblicherweise ein Filter, bei dem das wenigstens eine Filterelement gemeinsam mit dem Filtergehäuse ausgetauscht wird. In der Regel ist das wenigstens eine Filterelement fest in dem Filtergehäuse angeordnet. Entsprechend müssen die Verbindungen zwischen Gehäusetopf und Gehäusedeckel nicht zerstörungsfrei lösbar sein.

Die Erfindung ist nicht beschränkt auf eine Behandlungsvorrichtung einer Brennkraftmaschine eines Kraftfahrzeugs. Vielmehr kann sie auch bei andersartigen Brennkraftmaschinen, insbesondere Industriemotoren, eingesetzt werden. Die Erfindung kann auch bei andersartigen Behandlungsvorrichtungen für Fluid innerhalb oder außerhalb der Kraftfahrzeugtechnik verwendet werden. Die Erfindung kann auch bei Luftentölboxen oder Trockenmittelboxen verwendet werden.

### Kurze Beschreibung der Zeichnungen

Weitere Vorteile ergeben sich aus der folgenden Zeichnungsbeschreibung. In den Zeichnungen sind Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.
- Figur 1: eine isometrische Darstellung einer Behandlungsvorrichtung nach einem Ausführungsbeispiel der Erfindung, insbesondere einer Filtervorrichtung für Motoröl einer Brennkraftmaschine eines Kraftfahrzeugs, mit einer Behandlungseinheit und einem Anschlusskopf;
- Figur 2: eine isometrische Darstellung der Behandlungseinheit nach Figur 1 mit Draufsicht auf das Gehäuse-Verbindungsteil;
- Figur 3: einen Längsschnitt der Behandlungsvorrichtung nach Figur 1;
- Figur 4: eine Detailansicht der Behandlungsvorrichtung nach Figur 1 mit aufgeschnittenem Gehäuse;
- Figur 5: als Längsschnitt eine Detailansicht der Behandlungsvorrichtung nach Figur 1 im Bereich Anschlusskopf-Behandlungseinheit;
- Figur 6: eine isometrische Darstellung des Anschlusskopfes der Behandlungsvorrichtung nach Figur 1 mit Blick auf das Kopf-Verbindungsteil im Inneren des Anschlusskopfes;
- Figur 7: den Anschlusskopf nach Figur 6 mit freigelegtem Vorspannelement ohne KopfVerbindungsteil;
- Figur 8: eine isometrische Darstellung des Kopf-Verbindungsteils nach Figur 6;
- Figur 9: eine isometrische Darstellung des Gehäuse-Verbindungsteils nach Figur 2;
- Figur 10: eine isometrische Darstellung einer Variante des Gehäuse-Verbindungsteils nach Figur 9;
- Figur 11: eine teilgeschnittene Darstellung einer Variante des Gehäuse-Verbindungsteils nach Figur 10 verbunden mit einem Abdeckring des Gehäusedeckels;
- Figur 12: eine Draufsicht auf das Vorspannelement nach Figur 6;
- Figur 13: eine isometrische Darstellung eines Anschlusskopfes für eine Behandlungsvorrichtung nach Figur 1 ohne Spritzschutz mit erkennbarem Vorspannelement;
- Figur 14: eine isometrische Darstellung des Spritzschutzes für das Kopf-Verbindungsteil nach Figur 6 mit Blick auf dessen Außenseite;
- Figur 15: eine isometrische Darstellung des Spritzschutzes für das Kopf-Verbindungsteil nach Figur 6 mit Blick auf dessen Innenseite;
- Figur 16: eine isometrische Darstellung einer Variante des Spritzschutzes für das Kopf-Verbindungsteil nach Figur 6 mit Blick auf dessen Außenseite;
- Figur 17: eine isometrische Darstellung einer Variante des Spritzschutzes für das Kopf-Verbindungsteil nach Figur 6 mit Blick auf dessen Innenseite;
- Figur 18: eine isometrische Darstellung eines Anschlusskopfes einer Behandlungsvorrichtung nach einem weiteren Ausführungsbeispiel der Erfindung;
- Figur 19: eine isometrische Darstellung einer Behandlungseinheit einer Behandlungsvorrichtung nach einem weiteren Ausführungsbeispiel der Erfindung mit Draufsicht auf das Gehäuse-Verbindungsteil für einen Anschlusskopf nach Figur 18;
- Figur 20: in Draufsicht das Kopf-Verbindungsteil für den Anschlusskopf nach Figur 18; und
- Figur 21: in Draufsicht das Gehäuse-Verbindungsteil nach Figur 18.

### Ausführungsform(en) der Erfindung

In den Figuren sind gleiche oder ähnliche Bauteile mit gleichen Bezugszeichen beziffert.

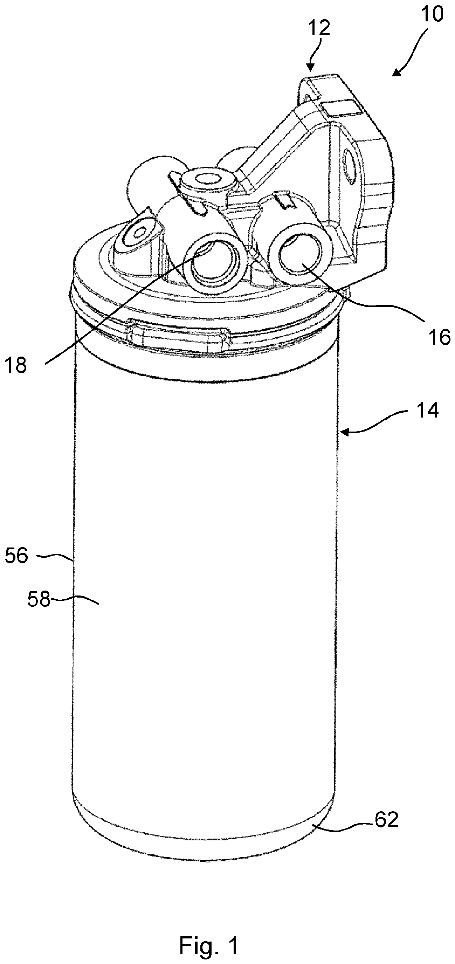

In den Figuren 1 bis 17 ist eine erste Ausgestaltung einer Behandlungsvorrichtung 10 in Form einer Filtervorrichtung für ein flüssiges Fluid, beispielsweise Motoröl eines Motorölkreislaufs einer Brennkraftmaschine eines Kraftfahrzeugs, und deren Komponenten in unterschiedlichen Perspektiven, Schnitten und Detailansichten gezeigt. Die Behandlungsvorrichtung 10 dient beispielsweise zur Reinigung des Motoröls.

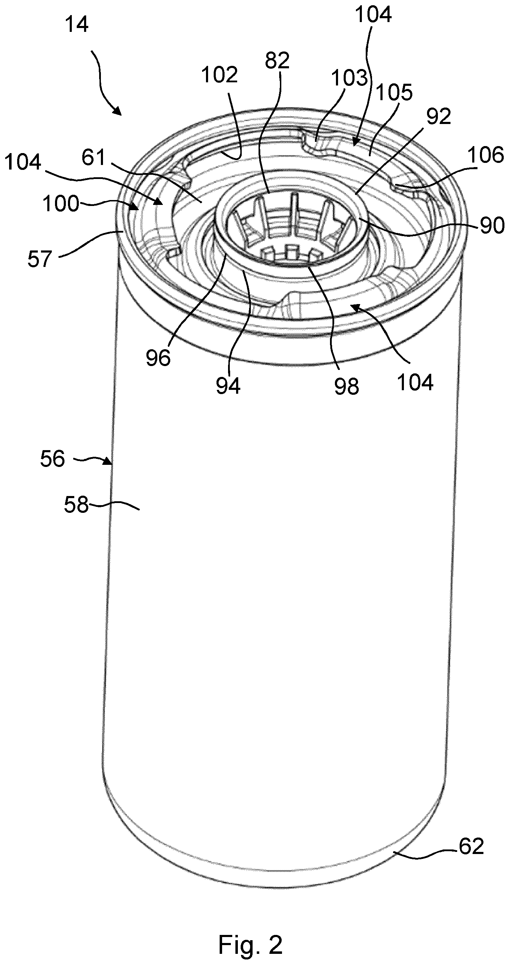

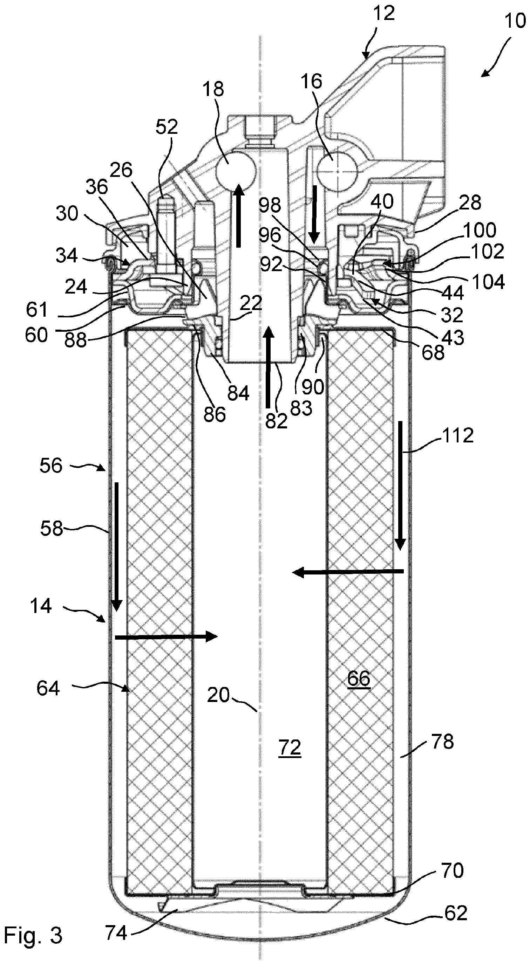

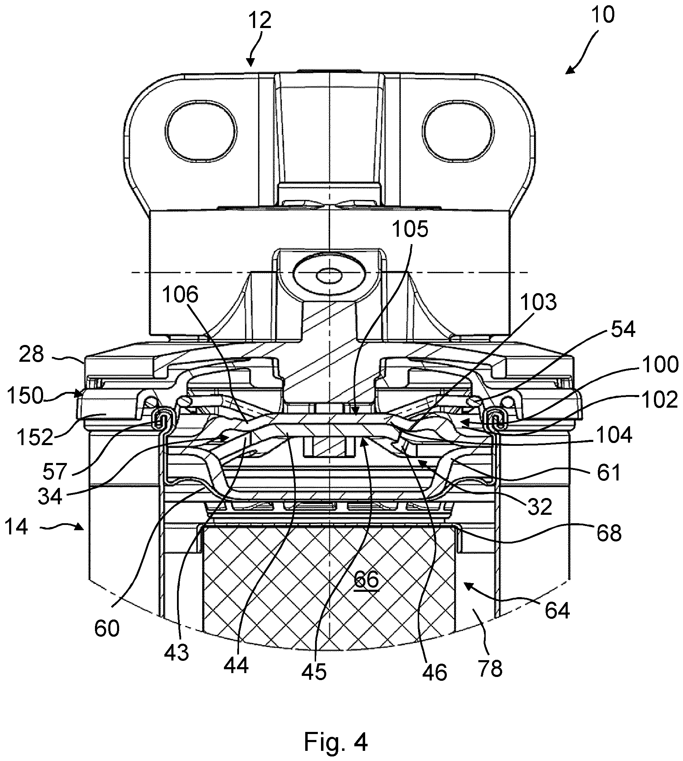

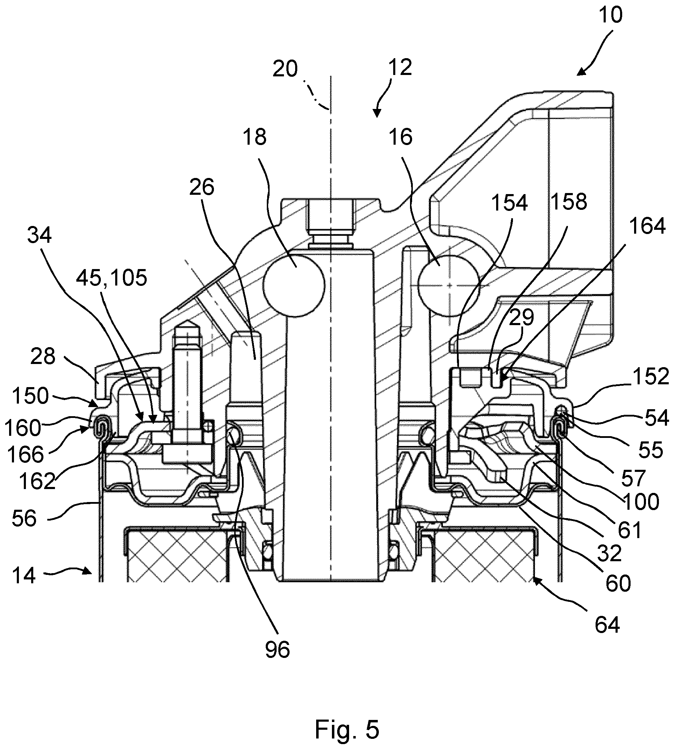

Figur 1 zeigt eine isometrische Darstellung der Behandlungsvorrichtung 10 mit einer Behandlungseinheit 14 und einem Anschlusskopf 12. Figur 2 zeigt eine isometrische Darstellung der Behandlungseinheit 14 mit Draufsicht auf ein Gehäuse-Verbindungsteil 100. Figur 3 zeigt einen Längsschnitt der Behandlungsvorrichtung 14. Figur 4 zeigt eine Detailansicht der Behandlungsvorrichtung 14 mit aufgeschnittenem Gehäuse 56. Figur 5 zeigt als Längsschnitt eine Detailansicht der Behandlungsvorrichtung 14 im Bereich von Anschlusskopf 12 und Gehäuse 56.

Nach einer günstigen Ausgestaltung der Behandlungseinheit 14 kann das Gehäuse-Verbindungsteil 100 am äußeren Rand mit einem stabilen Abdeckring 61 des Gehäusedeckels 60 fest verbunden sein, insbesondere stoffschlüssig, insbesondere verschweißt. Vorteilhaft können Laserschweißen oder Buckelschweißen eingesetzt werden. Optional kann die Verbindung auch durch Löten hergestellt sein. Vorteilhaft kann durch die feste flächige Verbindung eine Bruchgefahr des Gehäuse-Verbindungsteils 100 bei über die Lebensdauer einwirkender Beanspruchung, beispielsweise durch Vibrationsbelastung, verringert werden. Günstigerweise kann die Form des Gehäusedeckels 60 auch an die Form des Abdeckrings 61 angepasst sein, um eine größere Zugfestigkeit des Gehäuse-Verbindungsteils 100 zu erreichen.

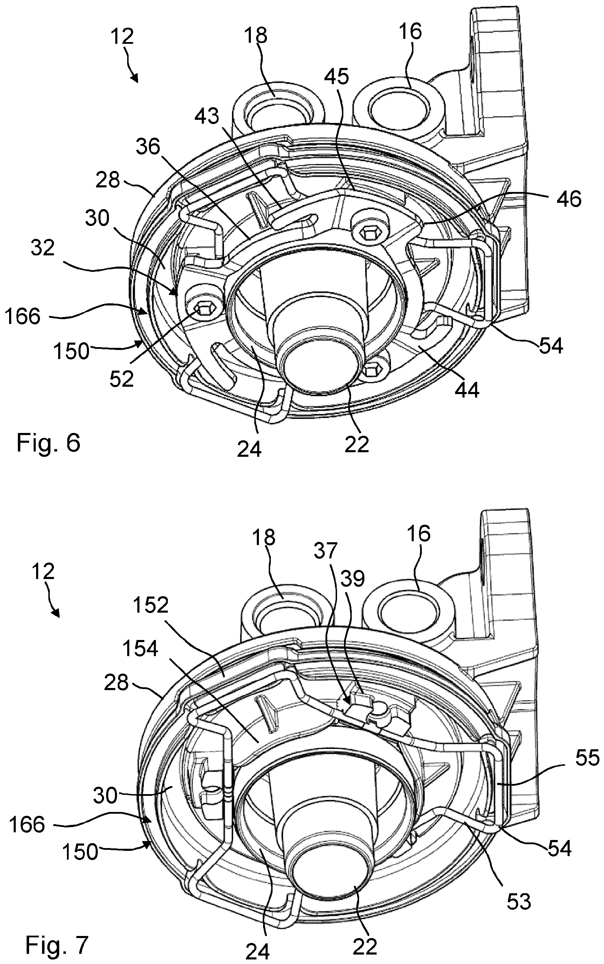

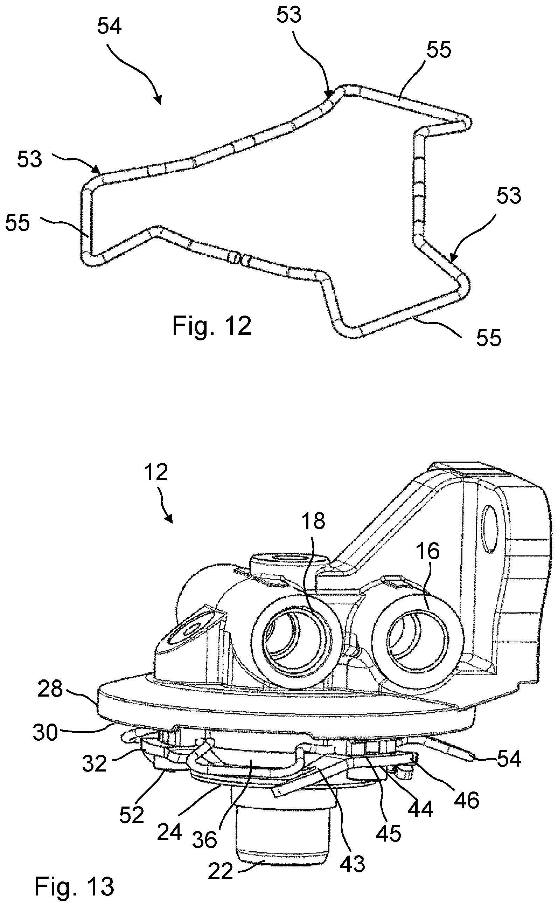

Die Behandlungsvorrichtung 10 umfasst den Anschlusskopf 12 in Form eines Filterkopfs, an dem als Behandlungseinheit 14 ein Wechselfilter lösbar befestigt ist. Der Anschlusskopf 12 ist fest mit der Brennkraftmaschine verbunden und dient als Anschlussteil für die Behandlungseinheit 14. Der Anschlusskopf 12 ist in zwei Ausführungen im Detail in den Figuren 6 und 13 gezeigt. Der Anschlusskopf 12 umfasst einen Zulauf 16 und einen Ablauf 18 für das Motoröl. Der Zulauf 16 und der Ablauf 18 sind in hier nicht weiter ausgeführter Weise mit entsprechenden Ölleitungen der Brennkraftmaschine verbunden.

Der Anschlusskopf 12 weist ferner einen bezüglich einer Verbindungsachse 20 koaxialen radial inneren Anschlussstutzen 22 auf.

Wenn im Folgenden von "axial", "radial", "koaxial", "umfangsmäßig" oder dergleichen die Rede ist, so bezieht sich dies, sofern nicht anders erwähnt, auf die Verbindungsachse 20. Im gezeigten Ausführungsbeispiel fällt die Verbindungsachse 20 mit einer Filterachse der Behandlungseinheit 14 zusammen.

Der innere Anschlussstutzen 22 ist etwa kreiszylindrisch. Er erstreckt sich auf der Seite des Anschlusskopfs 12, welche der Behandlungseinheit 14 zugewandt ist. Er ist an seinen beiden Stirnseiten offen. Auf seiner der Behandlungseinheit 14 abgewandten Seite ist der innere Anschlussstutzen 22 fluidtechnisch mit dem Ablauf 18 verbunden.

Der innere Anschlussstutzen 22 ist koaxial von einem kreiszylindrischen radial äußeren Anschlussstutzen 24 umgeben. Der innere Anschlussstutzen 22 überragt auf der der Behandlungseinheit 14 zugewandten Seite den äußeren Anschlussstutzen 24 in axialer Richtung.

Der innere Anschlussstutzen 22 und der äußere Anschlussstutzen 24 begrenzen jeweils umfangsseitig einen koaxialen Einlassringraum 26. Der Einlassringraum 26 ist über eine Fluidverbindung mit dem Zulauf 16 verbunden.

Der innere Anschlussstutzen 22 und der äußere Anschlussstutzen 24 sind koaxial von einer kreiszylindrischen Umfangswand 28 umgeben. Der der Behandlungseinheit 14 zugewandte freie Rand der Umfangswand 28 befindet sich etwa auf der gleichen axialen Höhe wie der freie Rand des äußeren Anschlussstutzens 24. Der Anschlussstutzen 24 überragt die Umfangswand 28 geringfügig in Richtung Behandlungseinheit 14.

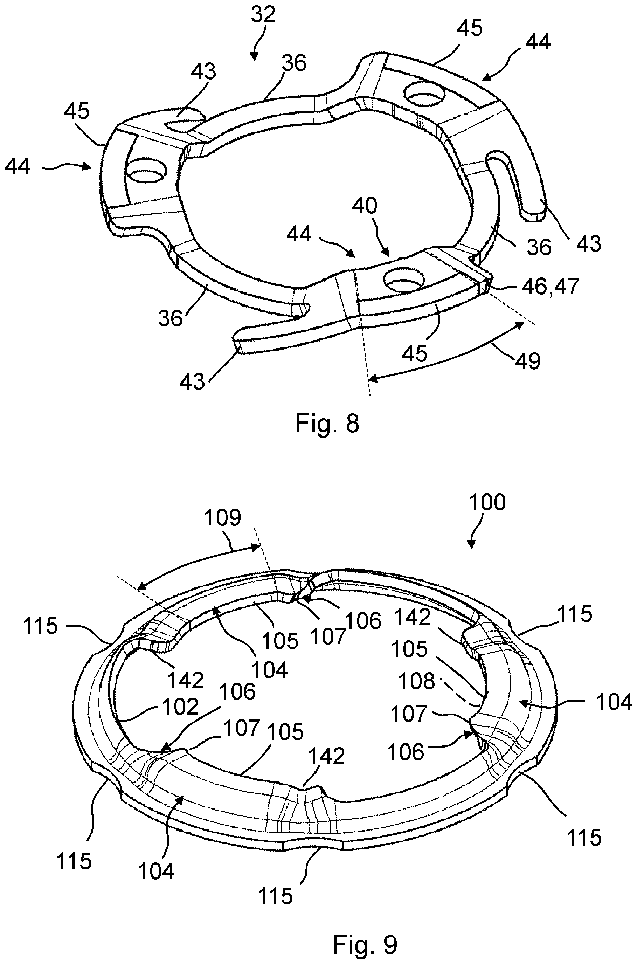

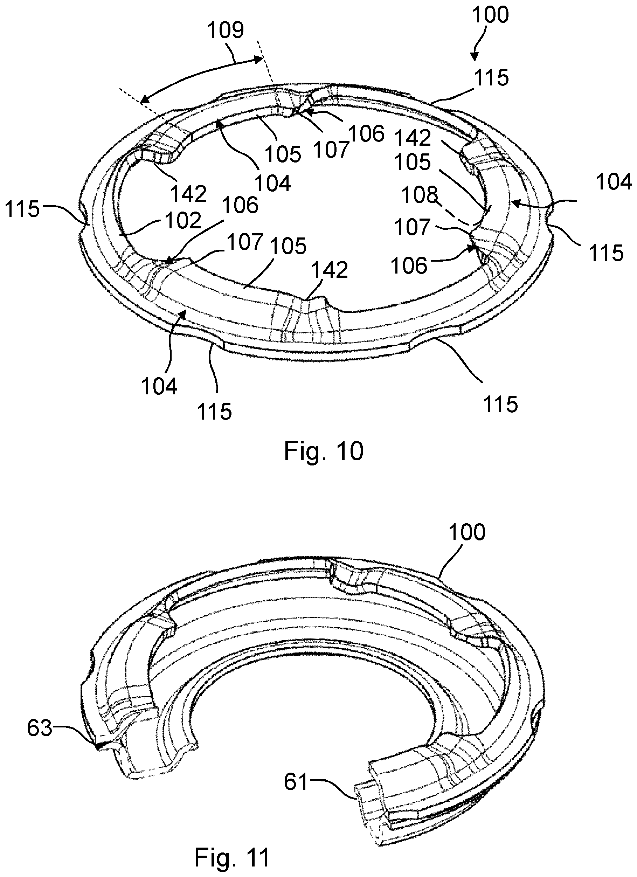

Figur 6 zeigt eine isometrische Darstellung des Anschlusskopfes 12 der Behandlungsvorrichtung 14 nach Figur 1 mit Blick auf das Kopf-Verbindungsteil 32 im Inneren des Anschlusskopfes 12. Figur 7 zeigt den Anschlusskopf 12 mit freigelegtem Vorspannelement 54 ohne Kopf-Verbindungsteil 32. Figur 8 zeigt eine isometrische Darstellung des Kopf-Verbindungsteils 12 nach Figur 6. Figur 9 zeigt eine isometrische Darstellung des dazu komplementären Gehäuse-Verbindungsteils 100, das in Figur 10 in einer Variante dargestellt ist.

In der Ausgestaltung des Anschlusskopfs 12 nach Figur 6 bildet die Umfangswand 28 eine radial äußere Begrenzung eines axial äußeren Teils des Anschlusskopfs 12 auf der der Behandlungseinheit 14 abgewandten Seite. Teilweise überdeckt von der Umfangswand 28 ist ein Spritzschutzteil 150 angeordnet. Das Spritzschutzteil 150 ist beispielsweise aus vulkanisiertem Elastomer oder thermoplastischem Elastomer (TPE) gefertigt. Das Spritzschutzteil 150 und der äußere Anschlussstutzen 24 begrenzen jeweils umfangsseitig einen ringförmigen koaxialen Verbindungsraum 30. In Figur 13 ist ein gleichartig aufgebauter Anschlusskopf 12 ohne Spritzschutzteil dargestellt.

In dem Verbindungsraum 30 ist ein Kopf-Verbindungsteil 32 einer lösbaren bajonettartigen Verbindungseinrichtung 34 angeordnet. Mit der Verbindungseinrichtung 34 ist die Behandlungseinheit 14 lösbar an dem Anschlusskopf 12 befestigt. Dazu ist in der Behandlungseinheit 14 ein komplementäres Gehäuse-Verbindungsteil 100 angeordnet.

Das insgesamt etwa ringförmige Kopf-Verbindungsteil 32 ist vorzugsweise aus Blech geformt. Die Dicke des Blechs ist konstant etwa 2 bis 3 mm.

Radial innen weist das Kopf-Verbindungsteil 32 einen ringförmigen Kopf-Montageabschnitt 36 auf. Der Kopf-Montageabschnitt 36 stößt mit seiner radial inneren Umfangsseite etwa an die radial äußere Umfangsseite des äußeren Anschlussstutzens 24. Der Kopf-Montageabschnitt 36 erstreckt sich etwa in einer Ebene radial und umfangsmäßig. Das Kopf-Verbindungsteil 32 erstreckt sich radial etwa bis zur Mitte des Verbindungsraums 30.

Der Kopf-Montageabschnitt 36 geht in diesem Beispiel in drei kopfseitige Funktionselemente 44 in Form von Bajonettabschnitten über, wie in der Detaildarstellung in Figur 8 erkennbar ist. Statt drei Funktionselementen 44 können auch vier oder fünf vorgesehen sein.

Vorteilhaft kann das Kopf-Verbindungsteil 32 und/oder das Gehäuse-Verbindungsteil 100 nicht als Ziehteil, sondern als einfaches Blechbiegeteil ausgeführt sein. Bei einem Biegeteil sind nur geringe Umformgrade notwendig. Die Verbindungseinrichtung 34 kann aus einem härteren Material gebildet sein, so dass das Kopf-Verbindungsteil 32 und/oder das Gehäuse-Verbindungsteil 100 eine verbesserte Verschleißfestigkeit aufweisen. Bei der Formgebung von Kopf-Verbindungsteil 32 und/oder Gehäuse-Verbindungsteil 100 können Aufwölbungen weitgehend vermieden werden, wenn das Material nur gebogen wird.

Im ungeformten Zustand sind die Kopf-Montageabschnitte 36 des Kopf-Verbindungsteils 32 beispielsweise nicht kreisabschnittsförmig wie in Figur 8, sondern in radialer Richtung leicht nach außen gewölbt. Insbesondere können die Kopf-Montageabschnitte 36 einen geringfügig unterschiedlichen, insbesondere größeren Durchmesser aufweisen als der Umfangsabschnitt 40. Typischerweise kann der Unterschied bei den Durchmessern bei etwa 1 mm liegen. Beim Biegen des Blechs schrumpft das Material nur in den Kopf-Montageabschnitten 36, so dass sich die Kopf-Montageabschnitte 36 radial nach innen ziehen. Die tragenden Bereiche der Funktionselemente 44 bleiben dagegen praktisch unbeeinflusst.

Das Gehäuse-Verbindungsteil 100 weist eine nur geringe Wölbung auf, so dass das Gehäuse-Verbindungsteil 100 eine axiale Erstreckung von nur wenigen Millimetern aufweist, beispielsweise maximal 6 mm, vorzugsweise maximal 4 mm, besonders bevorzugt maximal 3 mm.

Die Kopf-Montageabschnitte 36 haben eine geringere Breite in radialer Richtung als die kopfseitigen Bajonettabschnitte in Form der Funktionselemente 44. Die kopfseitigen Funktionselemente 44 sind in Form und Größe identisch. Die kopfseitigen Funktionselemente 44 sind umfangsmäßig gleichmäßig verteilt angeordnet. Die kopfseitigen Funktionselemente 44 weisen jeweils einen Umfangsabschnitt 40 auf, welcher sich im Wesentlichen umfangsmäßig parallel zu einem gedachten Kreiszylindermantel um die Verbindungsachse 20 erstreckt. Der Umfangsabschnitt 40 weist einen ebenen Auflagebereich 45 auf, der senkrecht zur Verbindungsachse 20 angeordnet ist. Das jeweilige Funktionselemente 44 weist eine in axialer Richtung schräg verlaufende Montagerampe 43 auf, die in den ebenen Auflagebereich 45 übergeht, der mit einem Rastelement 46 als Endanschlag 47 endet, an den ein Rücksprung zum benachbarten Kopf-Montageabschnitt 36 anschließt.

Die Umfangsabschnitte 40 verbinden also die Kopf-Montageabschnitte 36 mit den jeweiligen Montagerampen 43. Die Montagerampen 43 sind insbesondere in der Figur 8 gut sichtbar.

Jeder ebene Auflagebereich 45 weist eine Erstreckung 49 in Umfangsrichtung auf. Die ebenen Auflagebereiche 45 aller Funktionselemente 44 des Kopf-Verbindungsteils 32 nehmen eine Gesamtlänge in Umfangsrichtung von wenigstens 20% eines entsprechenden Umfangs auf demselben Radius des Kopf-Verbindungsteils 32 ein, bevorzugt wenigstens 23%, ganz besonders bevorzugt wenigstens 30%.

Die Montagerampen 43 haben jeweils einen etwa schraubenförmigen Verlauf um die Verbindungsachse 20. Die Steigung der schräg verlaufenden Montagerampen 43 entspricht etwa der Steigung eines üblichen Rechtsgewindes. Von der Behandlungseinheit 14 aus axial betrachtet sind die im Uhrzeigersinn vorderen freien Enden der Montagerampen 43 betrachtet jeweils näher an der Behandlungseinheit 14 als die im Uhrzeigersinn hinteren Enden. Zwischen den vorderen Enden der Montagerampen 43 und der Ebene des Kopf-Montageabschnitts 36 besteht jeweils eine Lücke, durch die entsprechende, weiter unten näher erläuterte, komplementäre gehäuseseitige Funktionselemente 104 in Form von Bajonettabschnitten eingeführt werden können.

Das Blech des Kopf-Verbindungsteils 32 ist im Kopf-Montageabschnitt 36, in den Umfangsabschnitten 40 und in den Montagerampen 43 gleich dick. Dies bedeutet auch, dass es in dem Kopf-Montageabschnitt 36 und in den Montagerampen 43 eine gleichmäßige axiale Ausdehnung hat.

Die Funktionselemente 44 weisen jeweils einen kopfseitigen Rastvorsprung 46 auf. Die Rastvorsprünge 46 sind als jeweilige Biegungen in den Funktionselementen 44 realisiert. Die Rastvorsprünge 46 erheben sich axial auf der der Behandlungseinheit 14 zugewandten Seite.

Mit der Verbindungseinrichtung 34 ist die Behandlungseinheit 14 lösbar an dem Anschlusskopf 12 befestigt. Dazu ist in der Behandlungseinheit 14 ein komplementäres Gehäuse-Verbindungsteil 100 angeordnet, das komplementäre Funktionselemente 104 aufweist. Figur 9 zeigt eine isometrische Darstellung des Gehäuse-Verbindungsteils 100 nach Figuren 2-5, das mit dem Kopf-Verbindungsteil 32 zusammenwirkt. In Figur 10 ist eine Variante des Gehäuse-Verbindungsteils 100 dargestellt.

Das Gehäuse-Verbindungsteil 100 der Verbindungseinrichtung 34 ist als ringförmiges koaxiales Element vorzugsweise aus Blech geformt. Eine Dicke des Blechs des Gehäuse-Verbindungsteils 100 entspricht etwa der Dicke des Blechs des Kopf-Verbindungsteils 32.

Das Gehäuse-Verbindungsteil 100 erstreckt sich radial von der radial äußeren Umfangsseite eines auf dem Gehäusedeckel 60 angeordneten stabilen Abdeckrings 61 (Figur 4, 5) bis über die radiale Mitte des Verbindungsraums 30. Das Gehäuse-Verbindungsteil 100 überlappt das Kopf-Verbindungsteil 32. Der Abdeckring 61 fängt den Innendruck der Behandlungseinheit 14 auf.

Das Gehäuse-Verbindungsteil 100 weist einen Gehäuse-Montageabschnitt 102 auf, welcher sich etwa in einer Ebene radial und umfangsmäßig erstreckt. Der Gehäuse-Montageabschnitt 102 ist radial außen axial zwischen dem Gehäusedeckel 60 und einer Bördelverbindung als Rand 57 des Gehäusetopfs 58 mit dem Gehäusedeckel 60 fixiert. Er liegt auf einer Seite flächig an dem Abdeckring 61 des Gehäusedeckels 60 auf. Der Montageabschnitt 102 kann mit dem Abdeckring 61 am Rand stoffschlüssig verbunden sein, insbesondere verschweißt sein.

Der Gehäuse-Montageabschnitt 102 geht auf seiner radial inneren Seite in drei identische gehäuseseitige Funktionselemente 104 in Form von Bajonettabschnitten über. Die gehäuseseitigen Funktionselemente 104 sind umfangsmäßig gleichmäßig verteilt angeordnet. Sie haben etwa die Form und Größe der dazu komplementären kopfseitigen Funktionselemente 44. Statt drei Funktionselementen 104 können auch vier oder fünf vorgesehen sein.

Die gehäuseseitigen Funktionselemente 104 wirken komplementär zu den Funktionselementen 44 und umfassen jeweils einen ebenen Auflagebereich 105 sowie einen Gleitbereich 142 an einem umfangseitigen Ende des Auflagebereichs 105 und einen Endanschlag 107 in Form eines kleinen, geringfügig nach innen weisenden Zapfens sowie ein Rastelement 106 am gegenüberliegenden umfangseitigen Ende des Auflagebereichs 105. Der Endanschlag 107 stößt an eine Kante 37 eines Gewindeelements 39 (Figur 7) im Anschlusskopf 12 an und verhindert ein Überdrehen bei der Montage. Bei Herstellung der Verbindung zwischen Kopf-Verbindungsteil 32 und Gehäuse-Verbindungsteil 100 gleitet die Gleitbereiche 142 auf den Montagerampen 43 des gehäuseseitigen Kopf-Verbindungsteils 32. Die Rastelemente 106 erlauben ein Verrasten des Gehäuseverbindungsteils 100 an den Rastelementen 46 des Kopf-Verbindungsteils 32.

Der jeweilige ebene Auflagebereich 105 weist eine Kontaktfläche 108 auf, die in Figur 9 an der nicht sichtbaren Seite der Auflagebereiche 105 angeordnet ist und die bei hergestellter Verbindung mit dem Kopf-Verbindungsteil 32 jeweils an den geraden Auflagebereichen 45 der Funktionselemente 44 anliegen. Jeder ebene Auflagebereich 105 weist eine Erstreckung 109 in Umfangsrichtung auf. Die ebenen Auflagebereiche 105 aller Funktionselemente 104 nehmen eine Gesamtlänge in Umfangsrichtung von wenigstens 20% eines entsprechenden Umfangs auf demselben Radius des Gehäuse-Verbindungsteils 100 ein, bevorzugt wenigstens 23%, ganz besonders bevorzugt wenigstens 30%.

Die Kontaktflächen 108 der geraden Auflagebereiche 105 befinden sich auf der dem Abdeckring 61 des Gehäusedeckels 60 zugewandten Seite des jeweiligen gehäuseseitigen Funktionselements 104. Im Schließzustand der Verbindungseinrichtung 34 werden die Kontaktflächen 108 jeweils zum Zusammenwirken von einer der kopfseitigen Funktionselemente 44 hintergriffen. Dabei liegen die Kontaktflächen 108 der geraden Auflagebereiche 105 jeweils flächig an den entsprechenden ebenen Bereichen 45 der Funktionselemente 44 an.

An seinem Außenumfang weist das Gehäuse-Verbindungsteil 100 Kerben 115 auf, die im montierten Zustand einen Verdrehschutz bieten. In der Ausführung gemäß Figur 9 sind die Kerben 115 zu beiden Seiten des Funktionselements 104 angeordnet. In der Ausführung gemäß Figur 10 sind die Kerben 115 etwa um 30° verdreht und jeweils etwa mittig im geraden Abschnitt 105 und dem Gehäuse-Verbindungsabschnitt 102 angeordnet.

Durch die Bördelverbindung zwischen Gehäusedeckel 60 und dem Gehäusetopf 58 zieht der Bördel den Gehäusedeckel 60 in die Kerben 115 hinein, so dass eine robuste Verdrehsicherung gebildet wird.

Die gehäuseseitigen Funktionselemente 104 weisen jeweils einen gehäuseseitigen Rastvorsprung 106 auf. Die Rastvorsprünge 106 erheben sich axial von dem Abdeckring 61 des Gehäusedeckels 60 weg. Bei montierter Behandlungseinheit 14 verrasten die gehäuseseitigen Rastvorsprünge 106 hinter den entsprechenden kopfseitigen Rastvorsprüngen 46.

Zum Anbau wird die Behandlungseinheit 14 mit dem Gehäusedeckel 60 bzw. dem Abdeckring 61 des Gehäusedeckels 61 voran koaxial auf die Anschlussseite des Anschlusskopfs 12 gesteckt.

Figur 11 zeigt eine teilgeschnittene Darstellung einer Variante des Gehäuse-Verbindungsteils 100 nach Figur 10, das am äußeren Rand 63 mit einem Abdeckring 61 des Gehäusedeckels 60 fest verbunden ist, beispielsweise verschweißt ist. Vorteilhaft können Laserschweißen oder Buckelschweißen eingesetzt werden. Optional kann die Verbindung auch durch Löten hergestellt sein. Vorteilhaft kann durch die feste flächige Verbindung eine Bruchgefahr des Gehäuse-Verbindungsteils 100 bei über die Lebensdauer einwirkender Beanspruchung, beispielsweise durch Vibrationsbelastung, verringert werden. Bei dem in Figur 11 dargestellten Ausführungsbeispiel ist der äußere Rand 63 des Abdeckrings 61 hochgezogen, um die Verbindung mit dem Gehäuse-Verbindungsteil 100 auszubilden. Vom äußeren Rand 63 nach radial innen weist der Abdeckring 61 eine Vertiefung auf, deren innerer Rand wieder hochgezogen ist. Auf diese Weise kann eine große Steifigkeit des Abdeckrings 61 erreicht werden. Das Gehäuse-Verbindungsteil 100 und der Abdeckring 61 liegen im äußeren Bereich auf. Der äußere Rand 63 ist der Bereich, in dem die Teile aufgeschmolzen werden, um sie zu verbinden. Auch bei einer unverschweißten Ausführung ist der innere Rand der Vertiefung wieder hochgezogen.

Das Kopf-Verbindungsteil 32 ist an dem Kopf-Montageabschnitt 36 mit insgesamt drei Schrauben 52, wie den Figuren 6 bis 8 gezeigt, von der der Behandlungseinheit 14 zugewandten Seite an dem Anschlusskopf 12 befestigt. Die Schrauben 52 befinden sich jeweils mittig in den Umfangsabschnitten 40.und sind in Gewindeelemente 39 eingeschraubt (Figur 7).

Im Verbindungsraum 30 ist ferner ein Vorspannelement 54 koaxial angeordnet. Das Vorspannelement 54 ist im Detail in Figur 12 zu erkennen. Die Figuren 6 und 7 lassen dessen Einbaulage im Kopf-Verbindungsteil 32 erkennen. Im Anschlusskopf 12 wird das Vorspannelement 54 mit leichtem Spiel in eine Nut gelegt und durch das angeschraubte Kopf-Verbindungsteil 32 gesichert. Dadurch werden auch die offenen Federenden des Vorspannelements 54 gehalten.

Das Vorspannelement 54 ist als Drahtbiegeteil ausgebildet und liegt an zwei bis fünf Bereichen am Anschlusskopf 12 bzw. an der Motor- oder Fahrzeugseite an und an zwei bis fünf Bereichen am Rand 57 des Gehäusetopfs 58 der Behandlungseinheit 14. Der Rand 57 des Gehäusetopfs 58 kann beispielsweise als Bördel ausgebildet sein. Der Auflagebereich des Vorspannelements 54 zum Rand 57 der Behandlungseinheit 14 hat einen geraden Bereich 55, der tangential zum Rand des Gehäusetopfs 58 ausgebildet ist. Der Umriss des nach außen gerichteten Federarms 53 entspricht ungefähr einem Rechteck oder Trapez. Hierdurch ergeben sich pro Auflagebereich der Federarme 53 drei Berührpunkte: zwei Berührpunkte da, wo der jeweilige Federarm 53 den Rand 57 kreuzt und ein Berührpunkt in der Mitte des geraden Bereichs 55. Das Vorspannelement 54 ist so geformt, dass die Federarme 53 möglichst flach auf dem Rand 57 des Gehäusetopfs 58, z.B. dem Bördel, aufliegen können.

Das Vorspannelement 54 hat mindestens zwei, in diesem Beispiel drei Federarme 53. Die Federarme 53 sind umfangsmäßig gleichmäßig verteilt. Die Federarme 53 erstrecken sich bezüglich der Verbindungsachse 20 im gleichen Drehsinn wie die Montagerampen 43 des Kopf-Verbindungsteils 32. Sie sind in axialer Richtung federelastisch biegsam.

Im Betrieb entsteht durch Vibrationen eine leichte Relativbewegung zwischen Vorspannelement 54 und Rand 57. Der gerade Bereich 55 erlaubt eine gleichmäßigere Auflage und damit einen gleichmäßigeren Verschleiß sowie ein geringeres Eingraben des Vorspannelements 54. Ein geringeres Lösemoment ist ebenfalls darstellbar. Ferner kann eine Skalierbarkeit auf unterschiedliche Durchmesser von Behandlungseinheiten 14 erreicht werden, welche durch unterschiedliche Massen unterschiedliche Vibrationsbelastungen erzeugen.

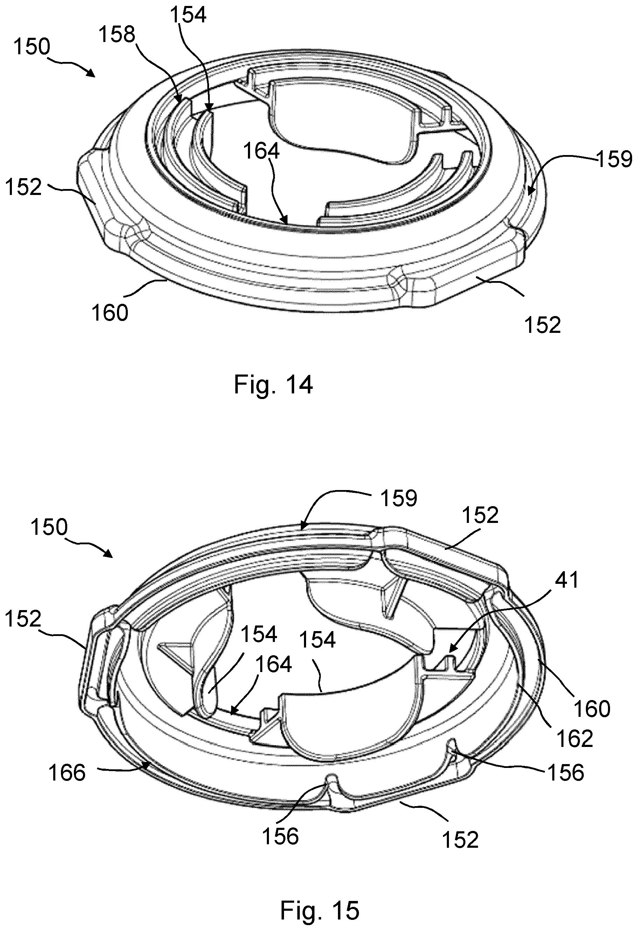

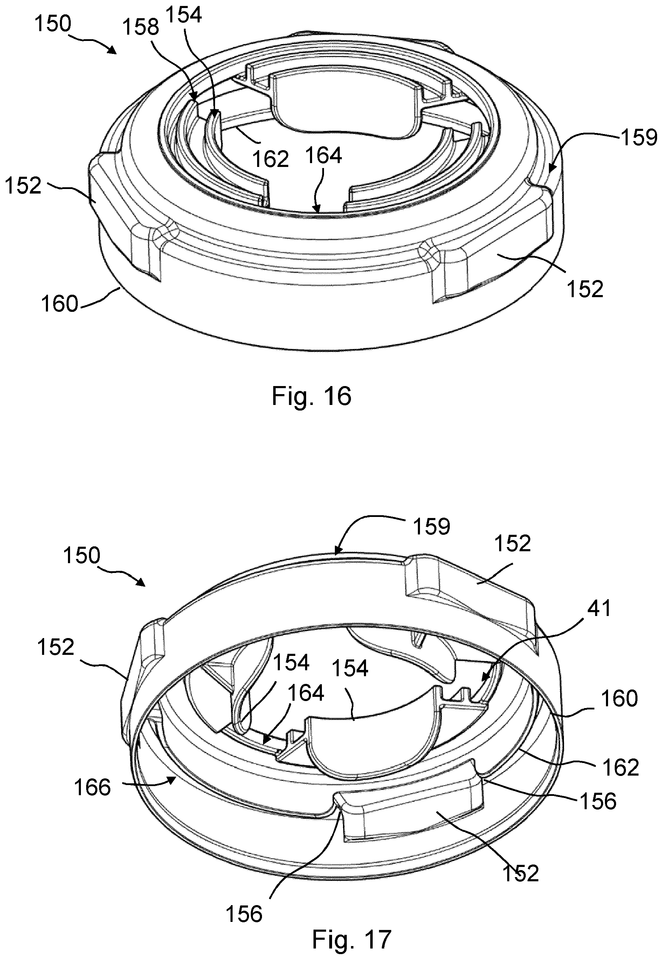

Gemäß der Ausgestaltung des Anschlusskopfs 12 in den Figuren 1 bis 17 umschließt die Umfangswand 28 einen oberen Teil des ringförmigen Spritzschutzteils 150. Das Spritzschutzteil 150 ist im Detail in den Figuren 14 und 15 in zwei verschiedenen Ansichten dargestellt. Die Figuren 16 und 17 zeigen in gleichen Ansichten eine Variante des Spritzschutzteils 150.

Das Spritzschutzteil 150 dient zum Schutz der Funktionselemente 44, 104 vor Spritzwasser und Staub. Das Spritzschutzteil 150 ist aus einem vulkanisiertem Elastomer oder einem thermoplastischen Elastomer (TPE) gebildet und dichtet vorzugsweise radial gegen den Anschlusskopf 12 und vorzugsweise axial gegen den Rand 57 der Behandlungseinheit 14. Im Bereich der Auflage der Federarme 53 des Vorspannelements 54 sind kleine Aussparungen 156 in Form einer Nut vorgesehen. Zum Anschlusskopf 12 ist das Spritzschutzteil 150 vorzugsweise durch das Kopf-Verbindungsteil 32 gehalten und geklemmt. Alternativ kann das Spritzschutzteil 150 auch in den Anschlusskopf 12 geknüpft sein.

Am Anschlusskopf 12 ist umlaufend ein zylindrischer Absatz 29 vorgesehen, der ein Übermaß zur Gegenkontur mit dem Dichtbereich 164 am Spritzschutzteil 150 aufweist, so dass das Spritzschutzteil 150 dort mit Vorspannung für eine bessere Dichtung sitzt. Der Dichtbereich 164 dichtet vorzugsweise in radialer Richtung gegen den Absatz 29. Alternativ kann in einer nicht dargestellten Ausführung der Dichtbereich 164 stattdessen in axialer Richtung dichtend ausgebildet sein.

Das Spritzschutzteil 150 überragt außen umlaufend den Rand 57 mit einer Lippe 160. Innerhalb des Rands 57 ist eine weitere Lippe 162 vorgesehen, die bei der Montage zur Zentrierung dient.

Die Lippen 160, 162 bilden einen Dichtbereich 166, der vorzugsweise axial gegen den Rand 57 abdichtet. Der Dichtbereich 164 weist einen kleineren Durchmesser auf als der Dichtbereich 166. Die Lippen 160, 162 erstrecken sich ungefähr gleich weit in axialer Richtung, wobei sich die innere Lippe 162 axial geringfügig etwas weiter erstreckt als die äußere Lippe.

Zusätzlich kann das Spritzschutzteil 150 durch die Umfangswand 28 am Anschlusskopf 12 unterstützt werden, die Spritzwasser zusätzlich abschirmt und das Spritzschutzteil 150 vor mechanischer Beschädigung bewahrt.

Das Spritzschutzteil 150 hat eine schirmartige Form. Dabei dichtet es auf einem kleinen Durchmesser gegen den Anschlusskopf 12 und auf einem großen Durchmesser gegen den Rand 57. In den Bereichen, in denen die Federarme 53 des Vorspannelements 54 zum Rand 57 ragen, weist das Spritzschutzteil 150 jeweils eine Ausbuchtung 152 auf, welche den jeweiligen Federarm 53 abdeckt. Dabei ist im geschlossenen Zustand der Verbindungseinrichtung 34 der äußere gerade Abschnitt 55 der Federarme 53 des Vorspannelements 54 in einer Nut zwischen Lippen 160, 162 des Spritzschutzteils 150 aufgenommen. Zwischen den Dichtbereichen 164 und 166 weist das Spritzschutzteil 150 einen membranartigen, flexiblen Bereich 159 auf, der aus relativ dünnem Material bestehen kann, das dünner ist als das Material der Dichtbereiche 164, 166. Die verbesserte Flexibilität und Verformbarkeit in diesem Bereich 159 erleichtert die Montage der Behandlungseinheit 14, da bei der Montage an den Filterkopf geringere Verformungskräfte und ein geringeres Reibmoment wirken.

Der Bereich 164 zwischen Dichtung zum Anschlusskopf 12 und der Bereich 166 der Auflage zum Rand 57 ist vorzugsweise nach außen gewölbt wie bei einer Membran, mit einer geringen Wandstärke für eine gute Verformbarkeit. Das Spitzschutzteil 150 wird bei Montage der Behandlungseinheit 14 um ca. 1-4 mm nach oben gedrückt. Im inneren Bereich können Rippen 154, 158 vorgesehen sein, die das Spritzschutzteil 150 zusätzlich klemmen. Die Rippen 154, 158 sind an den Stellen unterbrochen, an denen die Gewindeelemente 39 angeordnet sind.

In der Ausgestaltung des Spritzschutzes 150 in den Figuren 16 und 17 ist zu erkennen, dass die äußere Lippe 160 sich in axialer Richtung deutlich weiter erstreckt als die innere Lippe 162, am Rand 57 des Gehäusetopfs 58 (Figur 5) angeordnet ist. Dadurch, dass im montierten Zustand die äußere Lippe 160 axial den Rand 57 deutlich überragt, kann von der Seite auftreffendes Spritzwasser besser abgeschirmt werden.

Die Behandlungseinheit 14 ist als Spin-On-Filter mit einem runden Querschnitt ausgelegt. Er ist im Wesentlichen koaxial zur Verbindungsachse 20. Die Behandlungseinheit 14 weist ein Gehäuse 56 mit einem Gehäusetopf 58 auf, in dessen offener Seite ein Gehäusedeckel 60 mit seinem radial äußeren Rand mittels einer Bördelverbindung befestigt ist. Auf dem Gehäusedeckel 60 zum Anschlusskopf 12 hin ist ein stabiler Abdeckring 61 angeordnet. Ein radial äußerer Durchmesser des Gehäuses 56 im Bereich des Gehäusedeckels 60 ist kleiner als ein radial innerer Durchmesser des Spritzschutzteils 150 des Anschlusskopfes 12. Der Gehäusetopf 58 hat einen nach außen gewölbten Gehäuseboden 62. Der Gehäusedeckel 60 und der Gehäusetopf 58 sind aus Metall. Optional kann der Gehäusedeckel 60 auch mit dem Gehäusetopf 58 verschweißt sein.

In dem Gehäusetopf 58 ist ein koaxiales Filterelement 64 angeordnet (Figuren 3-5). Das Filterelement 64 verfügt über ein zu einem Filterbalg 66 gefaltetes, umfangsmäßig geschlossenes Filtermedium. An seinen Stirnseiten ist der Filterbalg 66 jeweils dicht mit einer Anschlussendscheibe 68, in der Figur 1 oben, und einer Gegenendscheibe 70 unten, verbunden. Die Anschlussendscheibe 68 befindet sich auf der dem Gehäusedeckel 60 zugewandten Seite des Filterelements 64.

Der Filterbalg 66 umgibt einen Elementinnenraum 72 des Filterelements 64. Der Elementinnenraum 72 befindet sich auf einer Reinseite des Filterelements 64.

Die Gegenendscheibe 70 verschließt den Elementinnenraum 72 auf der dem Gehäuseboden 62 zugewandten Stirnseite des Filterelements 64. An der dem Gehäuseboden 62 zugewandten Außenseite der Gegenendscheibe 70 stützen sich mehrere Federelemente 74 ab, die sich andererseits am Gehäuseboden 62 abstützen.

In der Gegenendscheibe 70 kann ein (nicht dargestelltes) federbelastetes Umgehungsventil angeordnet sein, welches im Öffnungszustand, unter hier nicht weiter interessierenden Bedingungen, eine Ölströmung von Motoröl vom Gehäuseboden 62 direkt unter Umgehung des Filtermediums in den Elementinnenraum 72 zulässt.

Das Filterelement 64 ist radial außen von einem rohseitigen Ringraum 78 umgeben, der von der radial inneren Umfangsseite des Gehäusetopfs 58 begrenzt wird.

Im Elementinnenraum 72 kann sich ferner ein (nicht dargestelltes) koaxiales Mittelrohr zwischen der Gegenendscheibe 70 und der Anschlussendscheibe 68 erstrecken. Eine Umfangswand des Mittelrohrs ist für das Motoröl durchlässig. Eine radial innere Umfangsseite, nämlich radial innere Faltkanten, des Filterbalgs 66 können sich an der radial äußeren Umfangsseite des Mittelrohrs abstützen.

Die Anschlussendscheibe 68 weist eine koaxiale Auslassöffnung 82 für das filtrierte Motoröl auf. An der radial inneren Umfangsseite ist die Anschlussendscheibe 68 zu einem koaxialen Zylinderstutzen 83 geformt, welcher sich axial von dem Elementinnenraum 72 weg erstreckt.

An der axial dem Elementinnenraum 72 abgewandten Seite des Zylinderstutzens 83 ist eine ringförmige koaxiale innere Dichtungseinheit 84 befestigt. Die innere Dichtungseinheit 84 besteht aus einem Elastomer.

Radial außen weist die innere Dichtungseinheit 84 eine Rücklaufsperrmembran 86 auf. Die Rücklaufsperrmembran 86 ist ringförmig und umgibt den Zylinderstutzen 83 radial außen. Die Rücklaufsperrmembran 86 liegt unter einer mechanischen Vorspannung an der dem Filterbalg 66 zugewandten Innenseite des Gehäusedeckels 60 an. Sie verschließt, wie in der Figur 3 gezeigt, im druckfreien Zustand eine koaxiale ringförmige Einlassöffnung 88 des Gehäusedeckels 60 für Motoröl. Sobald Motoröl der Behandlungsvorrichtung 10 zugeführt wird, öffnet die Rücklaufsperrmembran 86 aufgrund des Öldrucks in Durchlassrichtung. Ein Rücklauf des Motoröls durch die Einlassöffnung 88 wird durch die Rücklaufsperrmembran 86 verhindert.

Ein radial innerer Ringabschnitt der inneren Dichtungseinheit 84 bildet eine koaxiale innere Ringdichtung 90. Die innere Ringdichtung 90 liegt mit ihrer radial äußeren Umfangsseite dicht an der radial inneren Umfangsseite des Zylinderstutzens 83 an. Die innere Ringdichtung 90 liegt mit ihrer radial inneren Umfangsseite bei montierter Behandlungseinheit 14 dicht an einer als Dichtfläche ausgelegten radial äußeren Umfangsseite des radial inneren Anschlussstutzens 22 an. Mit der inneren Ringdichtung 90 wird im Bereich der Einlassöffnung 88 die Reinseite der Behandlungseinheit s 14 von ihrer Rohseite getrennt.

Der Gehäusedeckel 60 weist im Bereich der Einlassöffnung 88 einen abgestuften koaxialen äu-βeren Dichtungsstutzen 92 auf. Eine Einschnürung des äußeren Dichtungsstutzens 92 an seinem dem Filterbalg 66 axial abgewandten Ende bildet eine äußere Dichtungsnut 94 für eine äußere Ringdichtung 96 mit. Die äußere Ringdichtung 96 ist als O-Ring ausgelegt.

Ein radial äußerer Durchmesser des äußeren Dichtungsstutzens 92 außerhalb des Bereiches der Dichtungsnut 94 entspricht etwa dem radial inneren Durchmesser des äußeren Anschlussstutzens 24 des Anschlusskopfs 12. Bei montierter Behandlungseinheit 14 steckt der Dichtungsstutzen 92 in dem äußeren Anschlussstutzens 24. Die radial äußere Umfangsseite des äußeren Dichtungsstutzens 92 liegt dann an der radial inneren Umfangsseite des radial äußeren Anschlussstutzens 24 an.

Die äußere Dichtungsnut 94 ist auf ihrer dem Filterbalg 66 axial abgewandten Seite mit einem Abdeckring 98 bedeckt. Der Abdeckring 98 ist mittels Klemmlaschen mit dem äußeren Dichtungsstutzen 92 verbunden.

Bei montierter Behandlungseinheit 14 liegt die äußere Ringdichtung 96 an der als Dichtungsfläche ausgelegten radial inneren Umfangsseite des radial äußeren Anschlussstutzens 24 dicht an. Die äußere Ringdichtung 96 trennt so den ölführenden Bereich der Behandlungsvorrichtung 10 von dem Verbindungsraum 30 und von der Umgebung. Beispielsweise befindet sich die Ringdichtung 96 auf gleicher Höhe wie die Bajonettringe, d.h. das Kopf-Verbindungsteil 32 und das Gehäuse-Verbindungsteil 100 der Verbindungseinrichtung 34.

Spätestens wenn der Abdeckring 98 an der Stirnseite des radial äußeren Anschlussstutzens 24 des Anschlusskopfs 12 und/oder das Gehäuse-Verbindungsteils 100 an dem Kopf-Verbindungsteil 32 ankommt, wird dir Behandlungseinheit 14 zusätzlich im Rechtsdrehsinn, welcher der Schließdrehsinn der Verbindungseinrichtung 34 ist, um die Verbindungsachse 20 gedreht.

Sobald die freien Enden der gehäuseseitigen Funktionselemente 104 im Bereich der entsprechenden kopfseitigen Einführspalte 50 positioniert sind, beginnt die Führung der jeweiligen gehäuseseitigen Gleitbereiche 142 an den jeweiligen Montagerampen 43 der Funktionselemente 44. Die Federarme 53 des Vorspannelements 54 stützen sich mit ihren freien Enden mit den geraden Abschnitten 55 an dem Rand 57 des Gehäusetopfs 58in axialer Richtung ab. Durch den mit der Steigung der Montagerampen 43 und der Gleitbereiche 142 erreichten Zug in axialer Richtung zwischen den Funktionselementen 44 und 104 werden die innere Ringdichtung 90 auf den radial inneren Anschlussstutzen 22 und die äußere Ringdichtung 96 in den radial äußeren Anschlussstutzen 24 gezogen.

Sobald die gehäuseseitigen Rastvorsprünge 106 an den entsprechenden kopfseitigen Rastvorsprüngen 46 anstoßen, muss zum Weiterdrehen eine entsprechende Rastkraft überwunden werden. Die Rastkraft wird durch die Rückstellkraft der Federarme der Blattfeder 54 mit realisiert.

Nach Überwinden der Rastkraft verrasten die gehäuseseitigen Rastvorsprünge 116 hinter den gehäuseseitigen Rastvorsprüngen 46 und sichern somit die Verbindungseinrichtung 34 gegen ungewolltes Öffnen.

Zum Trennen der Behandlungseinheit 14 von dem Anschlusskopf 12 wird die Behandlungseinheit 14 im Linksdrehsinn, also in Öffnungsdrehsinn, um die Verbindungsachse 20 gedreht. Hierzu müssen zunächst die Rastkraft der gehäuseseitigen Rastvorsprünge 106 mit den kopfseitigen Rastvorsprüngen 46 überwunden werden.

Unter der Federvorspannung des Vorspannelements 54 werden die inneren Auflagebereiche 105 entlang der entsprechenden Auflagebereiche 45 der kopfseitigen Funktionselemente 44 geführt. Ferner werden die äußeren gehäuseseitigen Auflagebereiche 105 an jeweiligen Führungszapfen entlang geführt. Dabei wird mit den Führungszapfen jeweils eine axiale Abdrückkraft auf die äu-βeren gehäuseseitigen Auflagebereiche 105 erzeugt, welche gegen eine jeweilige Haltekraft der inneren Ringdichtung 90 und der äußeren Ringdichtung 96 wirken. Die Haltekräfte werden durch die jeweilige Reibung zwischen der inneren Ringdichtung 90 und dem inneren Anschlussstutzen 22 und zwischen der äußeren Ringdichtung 96 und dem äußeren Anschlussstutzen 24 realisiert. Mittels der Abdrückkraft werden jeweils in axialer Richtung die innere Ringdichtung 90 von dem inneren Anschlussstutzen 22 abgezogen und die äußere Ringdichtung 96 aus dem äußeren Anschlussstutzen 24 herausgezogen.

Sobald nach weiterer Drehbewegung die gehäuseseitigen Funktionselemente 104 die entsprechenden kopfseitigen Einführspalten 50 verlassen, wird die Behandlungseinheit 14 mit einer axialen Bewegung von dem Anschlusskopf 12 abgezogen.

Beim Betrieb der Behandlungsvorrichtung 10, also beim Betrieb der Brennkraftmaschine, strömt zu reinigendes Motoröl durch den Zulauf 16, angedeutet durch einen Pfeil 112, in den Einlassringraum 26. Von dort aus strömt das Motoröl durch die Einlassöffnung 88 unter Freigabe durch die Rücklaufsperrmembran 86 in den rohseitigen Ringraum 78 des Filtergehäuses 56. Das zu reinigende Motoröl durchströmt den Filterbalg 66 von radial außen nach radial innen und gelangt durch die Öffnungen des Mittelrohrs 88 in den Elementinnenraum 72. Vom Elementinnenraum 72 gelangt das gereinigte Motoröl durch die Auslassöffnung 82 und den radial inneren Anschlussstutzen 22 des Anschlusskopfs 12 zum Ablauf 18. Das gereinigte Motoröl verlässt den Anschlusskopf 12 und damit die Behandlungsvorrichtung 10 durch den Ablauf 18.

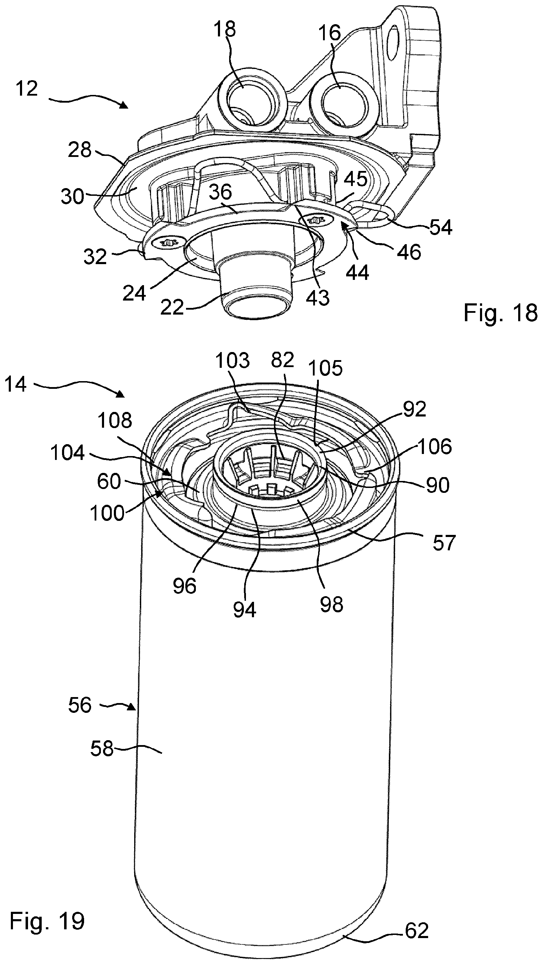

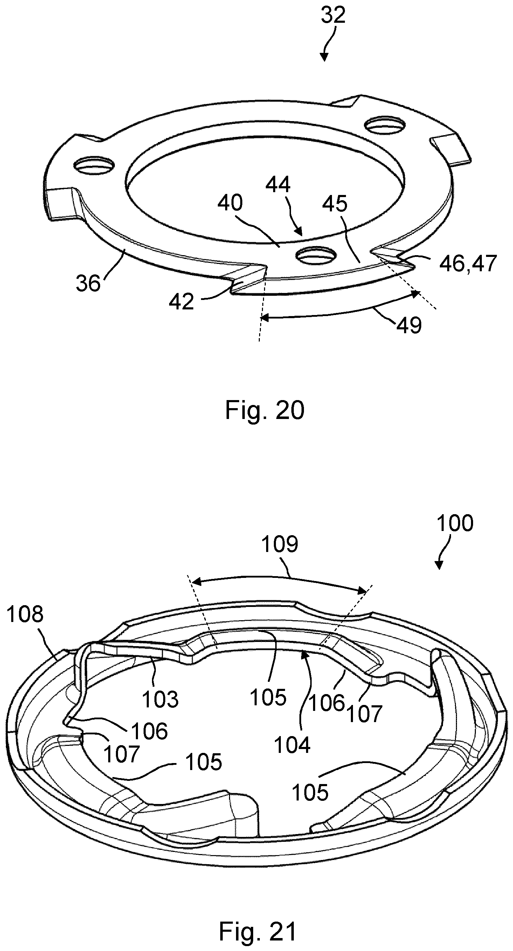

In den Figuren 18 bis 21 ist ein zweites Ausführungsbeispiel einer Behandlungsvorrichtung 10 in Form einer Filtervorrichtung gezeigt. Diejenigen Elemente, die zu denen des ersten Ausführungsbeispiels aus den Figuren 1 bis 17 ähnlich sind, sind mit denselben Bezugszeichen versehen. Figur 18 zeigt eine isometrische Darstellung eines Anschlusskopfes 12 einer Behandlungsvorrichtung 10, Figur 19 zeigt eine isometrische Darstellung einer Behandlungseinheit 14 der Behandlungsvorrichtung 10 mit Draufsicht auf das Gehäuse-Verbindungsteil 100 für den Anschlusskopf 12 nach Figur 18. Figur 20 zeigt in isometrischer Ansicht das Kopf-Verbindungsteil 32 für den Anschlusskopf 12, und Figur 21 zeigt in isometrischer Ansicht das Gehäuse-Verbindungsteil 100.

In dieser Ausgestaltung sind die Funktionen der Funktionselemente 44, 104 vertauscht. Der Gehäuse-Verbindungsabschnitt 100 weist Funktionselemente 104 mit Montagerampen 103 auf, die jeweils in gerade Auflageflächen 105 übergehen, die bezogen auf die Verbindungsachse 20 senkrecht zu dieser angeordnet sind.

Das Kopf-Verbindungsteil 32 weist drei Funktionselemente 44 mit jeweils einem Gleitbereich 42 (Figur 20) auf, der in die entsprechende Auflagefläche 45 übergeht. Wahlweise können die Funktionselemente 44 im Kopf-Verbindungsteil 32 nach außen offen ausgebildet sein, wie in Figur 20 dargestellt ist, oder nach innen offen ausgebildet sein (nicht dargestellt).

Die Zahl der Funktionselemente 44, 104 kann wahlweise auch vier oder fünf betragen.

## Patentansprüche

1. Behandlungsvorrichtung (10), insbesondere Filtervorrichtung, für ein Fluid, insbesondere für ein flüssiges Fluid, mit einer auswechselbaren Behandlungseinheit (14), welche ein Gehäuse (56) mit einem Gehäusetopf (58), einem Gehäusedeckel (60), wenigstens einem Einlass (88) für das zu behandelnde Fluid und wenigstens einem Auslass (82) für das behandelte Fluid aufweist, und mit einem Anschlusskopf (12), der wenigstens einen Zulauf (16) für das zu behandelnde Fluid, der mit dem wenigstens einen Einlass (88) verbindbar ist, und/oder wenigstens einen Ablauf (18) für das behandelte Fluid, der mit dem wenigstens einen Auslass (82) verbindbar ist, aufweist,
wobei der Anschlusskopf (12) und die Behandlungseinheit (14) mittels einer lösbaren bajonettartigen Verbindungseinrichtung (34) unter Ausführung einer Steck-/Drehbewegung um eine Verbindungsachse (20) der Behandlungsvorrichtung (10) miteinander verbindbar sind und
die Verbindungseinrichtung (34) wenigstens ein Gehäuse-Verbindungsteil (100) auf Seiten des Gehäuses (56) und wenigstens ein Kopf-Verbindungsteil (32) auf Seiten des Anschlusskopfs (12) aufweist, die zum Herstellen einer Verbindung der Verbindungseinrichtung (34) miteinander wirkverbindbar sind,
wobei das Gehäuse-Verbindungsteil (100) und das Kopf-Verbindungsteil (32) in Umfangsrichtung um die Verbindungsachse (20) jeweils wenigstens ein zueinander komplementäres Funktionselement (44, 104) aufweisen, die miteinander wirkverbindbar sind, und die Verbindungseinrichtung (34) wenigstens ein Vorspannelement (54) aufweist zur Realisierung einer mechanischen Vorspannung, mit der die zueinander komplementären Funktionselemente (44, 104) gegeneinander pressbar sind,
**dadurch gekennzeichnet, dass** das Vorspannelement (54) ein Federelement mit wenigstens zwei radial nach außen ragenden Federarmen (53) ist, welche an ihrer radial äußeren Stirnseite jeweils einen geraden Abschnitt (55) aufweisen, der tangential zu einem um die Verbindungsachse (20) kreisförmig verlaufenden Rand (57) ausgerichtet ist.

2. Behandlungsvorrichtung nach Anspruch 1, **dadurch gekennzeichnet, dass** das Vorspannelement (54) durch das Kopf-Verbindungsteil (32) im Anschlusskopf (12) gesichert ist.

3. Behandlungsvorrichtung nach Anspruch 1 oder 2, **dadurch gekennzeichnet, dass** die im Anschlusskopf (12) angeordneten Federarme (53) im Wesentlichen flach auf dem Rand (57) des Gehäusetopfs (58) aufliegen, insbesondere dass der jeweilige Federarm (53) drei Berührpunkte mit dem Rand (57) ausbildet, oder
dass die in der Behandlungseinheit (14) angeordneten Federarme (53) im Wesentlichen flach auf dem Rand des Anschlusskopfs (12) aufliegen, insbesondere dass die Federarme (53) jeweils drei Berührpunkte mit dem Rand des Anschlusskopfs (12) ausbilden.

4. Behandlungsvorrichtung nach einem der vorhergehenden Ansprüche, **dadurch gekennzeichnet, dass** der Anschlusskopf (12) Ausbuchtungen (152) für die Federarme (53) aufweist.

5. Behandlungsvorrichtung nach einem der vorhergehenden Ansprüche, **dadurch gekennzeichnet, dass** das Vorspannelement (54) als Drahtbiegeteil ausgebildet ist.

6. Behandlungsvorrichtung nach einem der vorhergehenden Ansprüche, **dadurch gekennzeichnet, dass** wenigstens eines der zueinander komplementären Funktionselemente (44, 104) eine Montagerampe (43, 103) aufweist, die in einen bezogen auf die Verbindungsachse (20) senkrechten Auflagebereich (45, 105) übergeht und das andere der zueinander komplementären Funktionselemente (104, 44) einen Gleitbereich (142, 42) aufweist, an den ein, bezogen auf die Verbindungsachse (20), senkrechter Auflagebereich (45, 105) anschließt,
wobei in einer Verbindungs-Endposition der Verbindungseinrichtung (34) die beiden Auflagebereiche (45, 105) bezogen auf die Verbindungsachse (20) übereinander positioniert sind, insbesondere wobei an den jeweiligen Auflagebereich (105, 45) in Umfangsrichtung ein Endanschlag (107, 47), insbesondere ein Rastelement (46, 110), insbesondere ein Rastvorsprung oder ein Rastabschnitt oder ein Rücksprung, wenigstens einer Rastsicherung anschließt, welche in der Schließposition der wenigstens einen Verbindungseinrichtung (34) hintereinander, miteinander oder ineinander verrastet.

7. Behandlungsvorrichtung nach Anspruch 5, **dadurch gekennzeichnet, dass** bei wenigstens einem der Funktionselemente (44, 104) ein oder mehrere Auflagebereiche (45, 105) vorgesehen sind, wobei eine Gesamtlänge in Umfangsrichtung wenigstens 20%, bevorzugt wenigstens 23%, ganz besonders bevorzugt wenigstens 30%, eines entsprechenden Umfangs auf demselben Radius des entsprechenden Gehäuse-Verbindungsteils (100) und/oder des Kopf-Verbindungsteils (32) einnimmt.

8. Behandlungsvorrichtung nach einem der vorhergehenden Ansprüche, **dadurch gekennzeichnet, dass** eine äußere Ringdichtung (96) radial innerhalb des Gehäuse-Verbindungsteils (100) angeordnet ist.

9. Behandlungsvorrichtung nach einem der vorhergehenden Ansprüche, **dadurch gekennzeichnet, dass** die Behandlungseinheit (14), insbesondere der Gehäusedeckel (60) und/oder eine Endscheibe (68) eines etwaigen Filterelements (64), und der Anschlusskopf (12) jeweils wenigstens ein Korrespondenzelement, insbesondere einen Stutzen, bevorzugt einen Anschlussstutzen (22, 24) und/oder Verbindungsstutzen und/oder Dichtungsstutzen (92) und/oder Zylinderstutzen (83), aufweisen, welche bei montierter Behandlungseinheit (14) paarweise korrespondieren,
insbesondere wobei wenigstens ein Paar von Korrespondenzelementen (22, 83) innerhalb wenigstens eines anderen Paares von Korrespondenzelementen (24, 92) angeordnet ist.

10. Behandlungsvorrichtung nach einem der vorhergehenden Ansprüche, **dadurch gekennzeichnet, dass** das Kopf-Verbindungsteil (32) und/oder das Gehäuse-Verbindungsteil (100) aus Blech ist oder Blech aufweist.

11. Behandlungseinheit (14) für eine Behandlungsvorrichtung (10), insbesondere nach einem der vorigen Ansprüche, insbesondere Filtervorrichtung, wobei die Behandlungseinheit ein Gehäuse (56) aufweist mit einem Gehäusetopf (58), einem Gehäusedeckel (60), wenigstens einem Einlass (88) für das zu behandelnde Fluid und wenigstens einem Auslass (82) für das behandelte Fluid,
wobei die Behandlungseinheit (14) mittels einer lösbaren bajonettartigen Verbindungseinrichtung (34) unter Ausführung einer Steck-/Drehbewegung um eine Verbindungsachse (20) einer Behandlungsvorrichtung (10) mit einem Anschlusskopf (12) der Behandlungsvorrichtung (10) verbindbar ist
und die Verbindungseinrichtung (34) wenigstens ein Gehäuse-Verbindungsteil (100) auf Seiten des Gehäuses (56) aufweist, das zum Verbinden der Verbindungseinrichtung (34) mit wenigstens einem Kopf-Verbindungsteil (32) auf Seiten des Anschlusskopfs (12) ausgebildet ist, wobei der wenigstens eine Einlass (88) mit wenigstens einem Zulauf (16) des Anschlusskopfs (12) für das zu behandelnde Fluid und/oder der wenigstens eine Auslass (82) mit wenigstens einem Ablauf (18) des Anschlusskopfs (12) für das behandelte Fluid verbindbar ist, wobei das Gehäuse-Verbindungsteil (100) und das Kopf-Verbindungsteil (32) in Umfangsrichtung um die Verbindungsachse (20) jeweils wenigstens ein zueinander komplementäres Funktionselement (44, 104) aufweisen, die miteinander wirkverbindbar sind, und die Verbindungseinrichtung (34) wenigstens ein Vorspannelement (54) aufweist zur Realisierung einer mechanischen Vorspannung, mit der die zueinander komplementären Funktionselemente (44, 104) gegeneinander pressbar sind,
**dadurch gekennzeichnet, dass** das Vorspannelement (54) ein Federelement mit wenigstens zwei radial nach außen ragenden Federarmen (53) ist, welche an ihrer radial äußeren Stirnseite jeweils einen geraden Abschnitt (55) aufweisen, der tangential zu einem um die Verbindungsachse (20) kreisförmig verlaufenden Rand (57) ausgerichtet ist, wobei das Vorspannelement (54) durch das Gehäuse-Verbindungsteil (100) am Gehäusedeckel (60) der Behandlungseinheit (14) gesichert ist.

12. Behandlungseinheit nach einem der Ansprüche 10 oder 11, **dadurch gekennzeichnet, dass** die Federarme (53) ausgebildet sind, im Wesentlichen flach auf dem Rand des Anschlusskopfs (12) aufzuliegen, insbesondere dass am jeweiligen Federarm (53) drei Berührpunkte mit dem Rand vorgesehen sind.

13. Behandlungseinheit nach einem der Ansprüche 10 bis 12, **dadurch gekennzeichnet, dass** das Vorspannelement (54) als Drahtbiegeteil ausgebildet ist.

14. Behandlungseinheit nach einem der Ansprüche 10 bis 13, **dadurch gekennzeichnet, dass** das wenigstens eine Gehäuse-Verbindungsteil (100) wenigstens ein Funktionselement (104) aufweist, wobei das wenigstens eine Funktionselement (104) mit wenigstens einem Funktionselement (44) des Kopf-Verbindungsteils (32) wirkverbindbar ist und wobei das wenigstens eine Funktionselement (104) einen bezogen auf die Verbindungsachse (20) senkrechten Auflagebereich (105) aufweist, insbesondere wobei das wenigstens eine Funktionselement (104) eine Montagerampe (103) oder einen Gleitbereich (142) aufweist, die oder der in einen, bezogen auf die Verbindungsachse (20) senkrechten, Auflagebereich (105) übergeht.

15. Behandlungseinheit nach einem der Ansprüche 10 bis 14, **dadurch gekennzeichnet, dass** ein oder mehrere Auflagebereiche (105) vorgesehen sind, wobei eine Gesamtlänge des oder der Auflagebereiche (105) in Umfangsrichtung wenigstens 20% eines entsprechenden Umfangs auf demselben Radius des Gehäuse-Verbindungsteils (100) einnimmt, bevorzugt wenigstens 23%, ganz besonders bevorzugt wenigstens 30%.

16. Behandlungseinheit nach einem der Ansprüche 10 bis 15, **dadurch gekennzeichnet, dass** das Gehäuse-Verbindungsteil (100) eine Verdrehsicherung aufweist, insbesondere dass das Gehäuse-Verbindungsteil (100) am Rand wenigstens eine Kerbe (115) als Verdrehsicherung aufweist.

17. Anschlusskopf (12) für eine Behandlungsvorrichtung (10), insbesondere nach einem der vorhergehenden Ansprüche 1 bis 10, zum Verbinden mit einer Behandlungseinheit (14), insbesondere nach einem der Ansprüche 11 bis 16, welche ein Gehäuse (56) aufweist mit einem Gehäusetopf (58), einem Gehäusedeckel (60), wenigstens einem Einlass (88) für das zu behandelnde Fluid und wenigstens einem Auslass (82) für das behandelte Fluid, wobei der Anschlusskopf (12) der Behandlungsvorrichtung (10) mittels einer lösbaren bajonettartigen Verbindungseinrichtung (34) unter Ausführung einer Steck-/Drehbewegung um eine Verbindungsachse (20) der Behandlungsvorrichtung (10) mit der Behandlungseinheit (14) verbindbar ist und die Verbindungseinrichtung (34) wenigstens ein Kopf-Verbindungsteil (32) auf Seiten des Anschlusskopfs (12) aufweist, das zum Verbinden der Verbindungseinrichtung (34) mit wenigstens einem Gehäuse-Verbindungsteil (100) auf Seiten des Gehäuses (56) ausgebildet ist, wobei wenigstens ein Zulauf (16) des Anschlusskopfs (12) mit dem wenigstens einen Einlass (88) für das zu behandelnde Fluid und/oder wenigstens ein Ablauf (18) des Anschlusskopfs (12) mit dem wenigstens einen Auslass (82) für das behandelte Fluid verbindbar ist, wobei das Gehäuse-Verbindungsteil (100) und das Kopf-Verbindungsteil (32) in Umfangsrichtung um die Verbindungsachse (20) jeweils wenigstens ein zueinander komplementäres Funktionselement (44, 104) aufweisen, die miteinander wirkverbindbar sind, und die Verbindungseinrichtung (34) wenigstens ein Vorspannelement (54) aufweist zur Realisierung einer mechanischen Vorspannung, mit der die zueinander komplementären Funktionselemente (44, 104) gegeneinander pressbar sind,
**dadurch gekennzeichnet, dass** das Vorspannelement (54) ein Federelement mit wenigstens zwei radial nach außen ragenden Federarmen (53) ist, welche an ihrer radial äußeren Stirnseite jeweils einen geraden Abschnitt (55) aufweisen, der tangential zu einem um die Verbindungsachse (20) kreisförmig verlaufenden Rand (57) ausgerichtet ist, wobei das Vorspannelement (54) durch das Kopf-Verbindungsteil (32) im Anschlusskopf (12) gesichert ist.

18. Anschlusskopf nach Anspruch 17, **dadurch gekennzeichnet, dass** die Federarme (53) ausgebildet sind, im Wesentlichen flach auf dem Rand (57) des Gehäusetopfs (58) aufzuliegen, insbesondere dass am jeweiligen Federarm (53) drei Berührpunkte mit dem Rand (57) vorgesehen sind.

19. Anschlusskopf nach einem der Ansprüche 17 bis 18, **dadurch gekennzeichnet, dass** anschlusskopfseitige Ausbuchtungen (152) für die Federarme (53) vorgesehen sind.

20. Anschlusskopf nach einem der Ansprüche 17 bis 19, **dadurch gekennzeichnet, dass** das Vorspannelement (54) als Drahtbiegeteil ausgebildet ist.

21. Anschlusskopf nach einem der Ansprüche 17 bis 20, **dadurch gekennzeichnet, dass** das wenigstens eine Kopf-Verbindungsteil (32) wenigstens ein Funktionselement (44) aufweist, wobei das wenigstens eine Funktionselement (44) mit wenigstens einem Funktionselement (104) des Gehäuse-Verbindungsteils (100) wirkverbindbar ist und wobei das wenigstens eine Funktionselement (44) einen bezogen auf die Verbindungsachse (20) senkrechten Auflagebereich (45) aufweist, insbesondere wobei das wenigstens eine Funktionselement (44) eine Montagerampe (43) oder einen Gleitbereich (42) aufweist, die oder der in einen, bezogen auf die Verbindungsachse (20) senkrechten, Auflagebereich (45) übergeht.

22. Anschlusskopf nach einem der Ansprüche 17 bis 21, **dadurch gekennzeichnet, dass** ein oder mehrere Auflagebereiche (45) vorgesehen sind, dessen oder deren Gesamtlänge in Umfangsrichtung wenigstens 20% eines entsprechenden Umfangs auf demselben Radius des Kopf-Verbindungsteils (32) einnimmt, bevorzugt wenigstens 23%, ganz besonders bevorzugt wenigstens 30%.

## Claims

1. A treatment apparatus (10), in particular filter apparatus, for a fluid, in particular for a liquid fluid, having a replaceable treatment unit (14) featuring a housing (56) having a housing pot (58), a housing cover (60), at least one inlet (88) for the fluid to be treated and at least one outlet (82) for the treated fluid, and having a connecting head (12) featuring at least one supply line (16) for the fluid to be treated which is connectable to the at least one inlet (88), and/or at least one discharge line (18) for the treated fluid which is connectable to the at least one outlet (82),
wherein the connecting head (12) and the treatment unit (14) is connectable to each other using a detachable bayonet-type connecting means (34) by executing a plug-in/rotational motion around a connecting axis (20) of the treatment apparatus (10) and
the connecting means (34) features at least one housing connecting part (100) on the side of the housing (56) and at least one head connecting part (32) on the side of the connecting head (12) which is actively connectable to one another for connecting the connecting means (34),
wherein the housing connecting part (100) and the head connecting part (32) respectively feature at least one functional element (44, 104) mutually complementary in the circumferential direction around the connecting axis (20) and which is actively connectable to one another, and the connecting means (34) features at least one pretensioning element (54) for realizing a mechanical pretension with which the mutually complementary functional elements (44, 104) can be pressed against one another,
**characterized in that** the pretensioning element (54) is a spring element having at least two radially outwardly projecting spring arms (53) which feature on their radially exterior front face respectively a straight section (55) which is aligned tangentially to an edge (57) extending circularly around the connecting axis (20).

2. The treatment apparatus according to claim 1, **characterized in that** the pretensioning element (54) is secured in the connecting head (12) by the head connecting part (32).

3. The treatment apparatus according to claim 1 or 2, **characterized in that** the spring arms (53) disposed in the connecting head (12) lie substantially flat on the edge (57) of the housing pot (58), in particular **in that** the respective spring arm (53) forms three points of contact with the edge (57), or
**in that** the spring arms (53) disposed in the treatment unit (14) lie substantially flat on the edge of the connecting head (12), in particular **in that** the spring arms (53) respectively form three points of contact with the edge of the connecting head (12).

4. The treatment apparatus according to one of the preceding claims,
**characterized in that** the connecting head (12) features bulges (152) for the spring arms (53).

5. The treatment apparatus according to one of the preceding claims,
**characterized in that** the pretensioning element (54) is designed as a wire bending part.

6. The treatment apparatus according to one of the preceding claims
**characterized in that** at least one of the functional elements (44, 104) mutually complementary features a mounting ramp (43, 103) which leads, with regard to the connecting axis (20), into a perpendicular support area (45, 105) and the other one of the functional elements (104, 44) mutually complementary features a sliding area (142, 42) which is, with regard to the connecting axis (20), adjoined by a perpendicular support area (45, 105),
wherein in a connecting end position of the connecting means (34) the two support areas (45, 105) are positioned one above the other with regard to the connecting axis (20), in particular wherein an end stop (107, 47), in particular a latching element (46, 110), in particular a latching projection or a latching portion or a recess, of at least one latching securing means, is adjoined to the respective support area (105, 45) in the circumferential direction, which in the closed position of the at least one connecting means (34) engages one behind the other, with one another or into one another.

7. The treatment apparatus according to claim 5, **characterized in that** one or a plurality of support areas (45, 105) are provided n at least one of the functional elements (44, 104), wherein a total length in circumferential direction occupies at least 20%, preferably at least 23%, very particularly preferably at least 30%, of a corresponding circumference on the same radius of the corresponding housing connecting part (100) and/or the head connecting part (32).

8. The treatment apparatus according to one of the preceding claims,
**characterized in that** the outer annular seal (96) is disposed radially inside the housing connecting part (100).

9. The treatment apparatus according to one of the preceding claims,
**characterized in that** the treatment unit (14), in particular the housing cover (60) and/or an end disc (68) of a possible filter element (64), and the connecting head (12) respectively feature at least one correspondence element, in particular a pipe connection, preferably a union (22, 24) and/or a connecting piece and/or a seal connecting piece (92) and/or a cylinder connecting piece (83), which correspond in pairs when the treatment unit (14) is mounted,
in particular wherein at least one pair of correspondence elements (22, 83) is disposed inside at least one other pair of correspondence elements (24, 92).

10. The treatment apparatus according to one of the preceding claims,
**characterized in that** the head connecting part (32) and/or the housing connecting part (100) is made of or features sheet metal.

11. A treatment unit (14) for a treatment apparatus (10), in particular according to one of the preceding claims, in particular filter apparatus, wherein the treatment unit features a housing (56) having
a housing pot (58), a housing cover (60), at least one inlet (88) for the fluid to be treated and at least one outlet (82) for the treated fluid, wherein the treatment unit (14) is connectable to a connecting head (12) of a treatment apparatus (10) using a releasable bayonet-type connecting means (34) by executing a plug-in/rotational motion around a connecting axis (20) of the treatment apparatus (10)
and the connecting means (34) featuring at least one housing connecting part (100) on the side of the housing (56) which is designed for connecting the connecting means (34) to at least one head connecting part (32) on the side of the connecting head (12), wherein the at least one inlet (88) is connectable to at least one supply line (16) of the connecting head (12) for the fluid to be treated and/or the at least one outlet (82) is connectable to at least one discharge line (18) of the connecting head (12) for the treated fluid,
wherein the housing connecting part (100) and the head connecting part (32) respectively feature at least one functional element (44, 104) mutually complementary in the circumferential direction around the connecting axis (20) and which is actively connectable to one another, and the connecting means (34) features at least one pretensioning element (54) for realizing a mechanical pretension with which the mutually complementary functional elements (44, 104) can be pressed against one another,
**characterized in that** the pretensioning element (54) is a spring element having at least two radially outwardly projecting spring arms (53) which feature on their radially exterior front face respectively a straight section (55) which is aligned tangentially to an edge (57) extending circularly around the connecting axis (20), wherein the pretensioning element (54) is secured by the housing connecting part (100) at the housing cover (60) of the treatment unit (14).

12. The treatment unit according to one of the claims 10 or 11, **characterized in that** the spring arms (53) are designed to rest substantially flat on the edge of the connecting head (12), in particular **in that** three points of contact with the edge are provided on the respective spring arm (53).

13. The treatment unit according to one of the claims 10 to 12, **characterized in that** the pretensioning element (54) is designed as a wire bending part.

14. The treatment unit according to one of the claims 10 to 13, **characterized in that** the at least one housing connecting part (100) features at least one functional element (104), wherein the at least functional element (104) is actively connectable to at least one functional element (44) of the head connecting part (32) and wherein the at least one functional element (104) features a perpendicular support area (105) with regard to the connecting axis (20), in particular wherein the at least one functional element (104) features a mounting ramp (103) or a sliding area (142) merging into a support area (105) perpendicular to the connecting axis (20).

15. The treatment unit according to one of the claims 10 to 14, **characterized in that** one or a plurality of support areas (105) are provided, wherein a total length of the support areas (105) in the circumferential direction occupies at least 20% of a corresponding circumference on the same radius of the housing connecting part (100), preferably at least 23%, very particularly preferably at least 30%.

16. The treatment unit according to one of the claims 10 to 15, **characterized in that** the housing connecting part (100) features an antitwist protection, in particular **in that** the housing connecting part (100) features at the edge at least one notch (115) as antitwist protection.

17. A connecting head (12) for a treatment apparatus (10), in particular according to one of the preceding claims 1 to 10, for connecting to a treatment unit (14), in particular according to one of the claims 11 to 16 featuring a housing (56) having a housing pot (58), a housing cover (60), at least one inlet (88) for the fluid to be treated and at least one outlet (82) for the treated fluid, wherein the connecting head (12) of the treatment apparatus (10) is connectable to the treatment unit (14) using a releasable bayonet-type connecting means (34) by executing a plug-in/rotational motion around a connecting axis (20) of the treatment apparatus (10) and the connecting means (34) features at least one head connecting part (32) on the side of the connecting head (12) and which is designed for connecting the connecting means (34) to at least one housing connecting part (100) on the side of the housing (56), wherein at least one supply line (16) of the connecting head (12) is connectable to the at least one inlet (88) for the fluid to be treated and/or at least one discharge line (18) of the connecting head (12) is connectable to the at least one outlet (82) for the treated fluid, wherein the housing connecting part (100) and the head connecting part (32) respectively feature at least one functional element (44, 104) mutually complementary in the circumferential direction around the connecting axis (20) and which is actively connectable to one another, and the connecting means (34) features at least one pretensioning element (54) for realizing a mechanical pretension with which the mutually complementary functional elements (44, 104) can be pressed against one another, **characterized in that** the pretensioning element (54) is a spring element having at least two radially outwardly projecting spring arms (53) which feature on their radially exterior front face respectively a straight section (55) which is aligned tangentially to an edge (57) extending circularly around the connecting axis (20), wherein the pretensioning element (54) is secured by the head connecting part (32) in the connecting head (12).

18. The connecting head according to claim 17, **characterized in that** the spring arms (53) are designed to rest substantially flat on the edge (57) of the housing pot (58), in particular **in that** three points of contact with the edge (57) are provided on the respective spring arm (53).

19. The connecting head according to one of the claims 17 to 18, **characterized in that** bulges (152) are provided on the connecting head side for the spring arms (53).

20. The connecting head according to one of the claims 17 to 19, **characterized in that** the pretensioning element (54) is designed as a wire bending part.

21. The connecting head according to one of the claims 17 to 20, **characterized in that** the at least one head connecting part (32) features at least one functional element (44), wherein the at least one functional element (44) is actively connectable to at least one functional element (104) of the housing connecting part (100) and wherein the at least functional element (44) features a perpendicular support area (45) with regard to the connecting axis (20), in particular wherein the at least one functional element (44) features a mounting ramp (43) or a sliding area (42) merging into the perpendicular support area (45) with regard to the connecting axis (20).

22. The connecting head according to one of the claims 17 to 21, **characterized in that** one or a plurality of support areas (45) are provided whose total length in the circumferential direction is at least 20% of a corresponding circumference on the same radius of the head connecting part (32), preferably at least 23%, very particularly preferably 30%.

## Revendications

1. Dispositif de traitement (10), notamment dispositif de filtration, pour un fluide, notamment pour un fluide liquide, ayant un élément de traitement remplaçable (14) présentant un boîtier (56) ayant un pot de boîtier (58), un couvercle de boîtier (60), au moins une entrée (88) pour le fluide à traiter et au moins une sortie (82) pour le fluide traité, et ayant une tête de raccordement (12) présentant au moins une arrivée (16) pour le fluide à traiter, qui peut être reliée à l'entrée (88), au moins au nombre d'une, et/ou au moins une évacuation (18) pour le fluide traité, qui peut être reliée à la sortie (82), au moins au nombre d'une,
la tête de raccordement (12) et l'élément de traitement (14) pouvant être raccordés l'un à l'autre au moyen d'un dispositif de raccordement amovible de type baïonnette (34) par un mouvement d'enfichage et de rotation autour d'un axe de raccordement (20) du dispositif de traitement (10) et
le dispositif de raccordement (34) présentant au moins un élément de raccordement de boîtier (100) du côté du boîtier (56) et au moins un élément de raccordement de tête (32) du côté de la tête de raccordement (12), qui peuvent interagir pour établir un raccordement du dispositif de raccordement (34),
l'élément de raccordement de boîtier (100) et l'élément de raccordement de tête (32) présentant respectivement, dans le sens circonférentiel autour de l'axe de raccordement (20), au moins un élément fonctionnel (44, 104) mutuellement complémentaires, et qui peuvent interagir pour être reliés entre eux, et le dispositif de raccordement (34) présentant au moins un élément de sollicitation (54) afin de réaliser une sollicitation mécanique avec laquelle les éléments fonctionnels (44, 104) mutuellement complémentaires peuvent être pressés l'un contre l'autre,
**caractérisé en ce que** l'élément de sollicitation (54) est un élément de ressort ayant au moins deux bras à ressort (53) faisant saillie radialement vers l'extérieur, qui présentent chacun sur leur face frontale radialement extérieure une section droite (55), qui est orientée tangentiellement à un bord (57) s'étendant de manière circulaire autour de l'axe de raccordement (20).

2. Dispositif de traitement selon la revendication 1, **caractérisé en ce que** l'élément de sollicitation (54) est sécurisé par l'élément de raccordement de tête (32) dans la tête de raccordement (12).

3. Dispositif de traitement selon la revendication 1 ou 2, **caractérisé en ce que** les bras à ressort (53) disposés dans la tête de raccordement (12) reposent essentiellement à plat sur le bord (57) du pot de boîtier (58), notamment **en ce que** le bras à ressort (53) respectif réalise trois points de contact avec le bord (57), ou
**en ce que** les bras à ressort (53) disposés dans l'élément de traitement (14) reposent essentiellement à plat sur le bord de la tête de raccordement (12), notamment **en ce que** les bras à ressort (53) réalisent chacun trois points de contact avec le bord de la tête de raccordement (12).

4. Dispositif de traitement selon l'une quelconque des revendications précédentes, **caractérisé en ce que** la tête de raccordement (12) présente des renflements (152) pour les bras à ressort (53).

5. Dispositif de traitement selon l'une quelconque des revendications précédentes, **caractérisé en ce que** l'élément de sollicitation (54) est réalisé en tant que pièce de pliage de fil.

6. Dispositif de traitement selon l'une quelconque des revendications précédentes, **caractérisé en ce que** l'un au moins des éléments fonctionnels (44, 104) mutuellement complémentaires présente une rampe de montage (43, 103) qui se transforme en une zone d'appui (45, 105) perpendiculaire par rapport à l'axe de raccordement (20) et l'autre des éléments fonctionnels (104, 44) mutuellement complémentaires présente une zone de glissement (142, 42) à laquelle se raccorde une zone d'appui (45, 105) perpendiculaire par rapport à l'axe de raccordement (20),
dans une position finale de raccordement du dispositif de raccordement (34), les deux zones d'appui (45, 105) étant positionnées l'une au-dessus de l'autre par rapport à l'axe de raccordement (20), notamment une butée d'extrémité (107, 47), notamment un élément d'encliquetage (46, 110), notamment une saillie d'encliquetage ou une section d'encliquetage ou un retrait d'au moins une sécurité d'encliquetage, étant reliée à la zone d'appui respective (105, 45) dans le sens circonférentiel, qui s'encliquettent l'une derrière l'autre, l'une avec l'autre ou l'une dans l'autre dans la position de fermeture du dispositif de raccordement (34), au moins au nombre d'un.

7. Dispositif de traitement selon la revendication 5, **caractérisé en ce qu'**une ou plusieurs zones d'appui (45, 105) sont prévues sur au moins un des éléments fonctionnels (44, 104), une longueur totale dans le sens circonférentiel occupant au moins 20%, de préférence au moins 23%, de façon particulièrement préférée au moins 30% d'une circonférence correspondante sur le même rayon de l'élément de raccordement de boîtier (100) correspondant et/ou de l'élément de raccordement de tête (32).

8. Dispositif de traitement selon l'une quelconque des revendications précédentes, **caractérisé en ce qu'**un joint annulaire extérieur (96) est disposé radialement à l'intérieur de l'élément de raccordement de boîtier (100).

9. Dispositif de traitement selon l'une quelconque des revendications précédentes, **caractérisé en ce que** l'élément de traitement (14), notamment le couvercle de boîtier (60) et/ou un disque d'extrémité (68) d'un éventuel élément filtrant (64), et la tête de raccordement (12) présentent respectivement au moins un élément correspondant, notamment une tubulure, de préférence une tubulure de raccordement (22, 24) et/ou une pièce de raccordement et/ou une tubulure d'étanchéité (92) et/ou une tubulure cylindrique (83), qui correspondent paire par paire lorsque l'élément de traitement (14) est monté, notamment au moins une paire d'éléments correspondants (22, 83) est disposée à l'intérieur au moins d'une autre paire d'éléments correspondants (24, 92).

10. Dispositif de traitement selon l'une quelconque des revendications précédentes, **caractérisé en ce que** l'élément de raccordement de tête (32) et/ou l'élément de raccordement de boîtier (100) est en tôle ou présente de la tôle.

11. Élément de traitement (14) pour un dispositif de traitement (10), notamment selon l'une quelconque des revendications précédentes, notamment dispositif de filtration, l'élément de traitement présentant un boîtier (56) ayant
un pot de boîtier (58), un couvercle de boîtier, (60) au moins une entrée (88) pour le fluide à traiter et une sortie (82) pour le fluide traité, l'élément de traitement (14) pouvant être raccordés au moyen d'un dispositif de raccordement amovible de type baïonnette (34) par un mouvement d'enfichage et de rotation autour d'un axe de raccordement (20) d'un dispositif de traitement (10) à une tête de raccordement (12) du dispositif de traitement (10)
et le dispositif de raccordement (34) présentant au moins un élément de raccordement de boîtier (100) du côté du boîtier (56) qui est conçu pour raccorder le dispositif de raccordement (34) à au moins un élément de raccordement de tête (32) du côté de la tête de raccordement (12), l'entrée (88), au moins au nombre d'une, pouvant être raccordée à au moins une arrivée (16) de le tête de raccordement (12) pour le fluide à traiter et/ou la sortie (82), au moins au nombre d'une, pouvant être raccordée à au moins une évacuation (18) de la tête de raccordement (12) pour le fluide traité,
l'élément de raccordement de boîtier (100) et l'élément de raccordement de tête (32) présentant respectivement, dans le sens circonférentiel autour de l'axe de raccordement (20), au moins un élément fonctionnel (44, 104) mutuellement complémentaires, et qui peuvent interagir pour être reliés entre eux, et le dispositif de raccordement (34) présentant au moins un élément de sollicitation (54) afin de réaliser une sollicitation mécanique avec laquelle les éléments fonctionnels (44, 104) mutuellement complémentaires peuvent être pressés l'un contre l'autre,
**caractérisé en ce que** l'élément de sollicitation (54) est un élément de ressort ayant au moins deux bras à ressort (53) faisant saillie radialement vers l'extérieur, qui présentent chacun sur leur face frontale radialement extérieure une section droite (55), qui est orientée tangentiellement à un bord (57) s'étendant de manière circulaire autour de l'axe de raccordement (20), l'élément de sollicitation (54) étant sécurisé par l'élément de raccordement de boîtier (100) sur le couvercle de boîtier (60) de l'élément de traitement (14).

12. Élément de traitement selon l'une quelconque des revendications 10 ou 11, **caractérisé en ce que** les bras à ressort (53) sont réalisés pour reposer essentiellement à plat sur le bord de la tête de raccordement (12), notamment **en ce que** trois points de contact avec le bord sont prévus sur chaque bras à ressort (53).

13. Élément de traitement selon l'une quelconque des revendications 10 à 12, **caractérisé en ce que** l'élément de sollicitation (54) est réalisé en tant que pièce de pliage de fil.

14. Élément de traitement selon l'une quelconque des revendications 10 à 13, **caractérisé en ce que** l'élément de raccordement de boîtier (100), au moins au nombre d'un, présente au moins un élément fonctionnel (104), l'élément fonctionnel (104), au moins au nombre d'un, pouvant être relié activement à au moins un élément fonctionnel (44) de l'élément de raccordement de tête (32) et l'élément fonctionnel (104), au moins au nombre d'un, présentant une zone d'appui (105) perpendiculaire par rapport à l'axe de raccordement (20), notamment l'élément fonctionnel (104), au moins au nombre d'un, présentant une rampe de montage (103) ou une zone de glissement (142) qui se transforme en une zone d'appui (105) perpendiculaire par rapport à l'axe de raccordement (20).

15. Élément de traitement selon l'une quelconque des revendications 10 à 14, **caractérisé en ce qu'**une ou plusieurs zones d'appui (105) sont prévues, une longueur totale de la ou des zones d'appui (105) dans le sens circonférentiel occupant au moins 20% d'une circonférence correspondante sur le même rayon de l'élément de raccordement de boîtier (100), de préférence au moins 23%, de façon particulièrement préférée au moins 30%.

16. Élément de traitement selon l'une quelconque des revendications 10 à 15, **caractérisé en ce que** l'élément de raccordement de boîtier (100) présente un dispositif anti-torsion, notamment **en ce que** l'élément de raccordement de boîtier (100) présente sur le bord au moins une encoche (115) en tant que dispositif anti-torsion.

17. Tête de raccordement (12) pour un dispositif de traitement (10), notamment selon l'une quelconque des revendications précédentes 1 à 10, pour un raccordement à un élément de traitement (14), notamment selon l'une quelconque des revendications 11 à 16 présentant un boîtier (56) ayant un pot de boîtier (58), un couvercle de boîtier (60), au moins une entrée (88) pour le fluide à traiter et au moins une sortie (82) pour le fluide traité, la tête de raccordement (12) du dispositif de traitement (10) pouvant être raccordés au moyen d'un dispositif de raccordement amovible de type baïonnette (34) par un mouvement d'enfichage et de rotation autour d'un axe de raccordement (20) du dispositif de traitement (10) à l'élément de traitement (14) et le dispositif de raccordement (34) présentant au moins un élément de raccordement de tête (32) du côté de la tête de raccordement (12) destiné à raccorder le dispositif de raccordement (34) à au moins un élément de raccordement de boîtier (100) du côté du boîtier (56), au moins une arrivée (16) de la tête de raccordement (12) pouvant être raccordée à l'entrée (88), au moins au nombre d'une, pour le fluide à traiter et/ou au moins une évacuation (18) de la tête de raccordement (12) pouvant être raccordée à la sortie (82), au moins au nombre d'une, pour le fluide traité, l'élément de raccordement de boîtier (100) et l'élément de raccordement de tête (32) présentant respectivement, dans le sens circonférentiel autour de l'axe de raccordement (20), au moins un élément fonctionnel (44, 104) mutuellement complémentaires, et qui peuvent interagir pour être reliés entre eux, et le dispositif de raccordement (34) présentant au moins un élément de sollicitation (54) afin de réaliser une sollicitation mécanique avec laquelle les éléments fonctionnels (44, 104) mutuellement complémentaires peuvent être pressés l'un contre l'autre,
**caractérisée en ce que** l'élément de sollicitation (54) est un élément de ressort ayant au moins deux bras à ressort (53) faisant saillie radialement vers l'extérieur, qui présentent chacun sur leur face frontale radialement extérieure une section droite (55), qui est orientée tangentiellement à un bord (57) s'étendant de manière circulaire autour de l'axe de raccordement (20), l'élément de sollicitation (54) étant sécurisé par l'élément de raccordement de tête (32) dans la tête de raccordement (12).

18. Tête de raccordement selon la revendication 17, **caractérisée en ce que** les bras à ressort (53) sont réalisés pour reposer essentiellement à plat sur le bord (57) du pot de boîtier (58), notamment **en ce que** trois points de contact avec le bord (57) sont prévus sur chaque bras à ressort (53).

19. Tête de raccordement selon l'une quelconque des revendications 17 à 18, **caractérisée en ce que** des renflements (152) du côté de la tête de raccordement sont prévus pour les bras à ressort (53).

20. Tête de raccordement selon l'une quelconque des revendications 17 à 19, **caractérisée en ce que** l'élément de sollicitation (54) est réalisé en tant que pièce de pliage de fil.

21. Tête de raccordement selon l'une quelconque des revendications 17 à 20, **caractérisée en ce que** l'élément de raccordement de tête (32), au moins au nombre d'un, présente au moins un élément fonctionnel (44), l'élément fonctionnel (44), au moins au nombre d'un, pouvant être relié activement à au moins un élément fonctionnel (104) de l'élément de raccordement de boîtier (100) et l'élément fonctionnel (44), au moins au nombre d'un, présentant, par rapport à l'axe de raccordement (20), une zone d'appui (45) perpendiculaire, notamment l'élément fonctionnel (44), au moins au nombre d'un, présentant une rampe de montage (43) ou une zone de glissement (42) qui se transforme en une zone d'appui (45) perpendiculaire par rapport à l'axe de raccordement (20).

22. Tête de raccordement selon l'une quelconque des revendications 17 à 21, **caractérisée en ce qu'**une ou plusieurs zones d'appui (45) sont prévues, dont la longueur totale dans le sens circonférentiel occupe au moins 20% d'une circonférence correspondante sur le même rayon de l'élément de raccordement de tête (32), de préférence au moins 23%, de façon particulièrement préférée 30%.
